(19) Europäisches Patentamt
European Patent Office
Office européen des brevets

(11) **EP 2 701 157 A2**

(12) **EUROPÄISCHE PATENTANMELDUNG**

(43) Veröffentlichungstag:
**26.02.2014 Patentblatt 2014/09**

(51) Int Cl.:
***G21B 3/00*** *(2006.01)*

(21) Anmeldenummer: **13004150.2**

(22) Anmeldetag: **22.08.2013**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **22.08.2012 DE 102012016564**

(71) Anmelder: **Galuga, Andrej**
**90449 Nürnberg (DE)**

(72) Erfinder:
• **Galuga, Andrej**
**DE-90449 Nürnberg (DE)**

• **Tcvetkov, Sergei**
**624250 Zarechny (RU)**
• **Vostrognutov, Stanislav**
**164524 Severodvinsk (RU)**
• **Losenkov, Alexander**
**196135 Sankt-Petersburg (RU)**

(74) Vertreter: **Küchler, Stefan**
**Patentanwalt**
**Färberstrasse 20**
**90402 Nürnberg (DE)**

(54) **Verfahren und Vorrichtung zur Durchführung der Kernfusion**

(57) Die Erfindung richtet sich auf ein Verfahren und eine Vorrichtung zur Durchführung einer Kernfusion unter Verwendung von Deuterium, absorbiert durch das Gitter eines Ausgangskörpers mit der Eigenschaft einer Wasserstoffaufnahme, unter vakuumthermischer Entgasung des in einen Reaktor eingebrachten Ausgangskörpers zwecks des Erreichens eines balancierten Drucks des verbleibenden Gases in dem Reaktor von nicht mehr als 1 Pa, unter weiterer Verringerung der Temperatur des Ausgangskörpers durch das gasförmige Deuterium bis zum Zeitpunkt des Erreichens einer Zusammensetzung des metallischen Ausgangskörpers, welcher einer Gamma-Phase ähnelt, durch den Einlass des obenerwähnten Deuteriums in den Reaktor sowie das Initiieren der Kernfusion, wobei die vakuum-thermische Entgasung des in dem Reaktor angebrachten Ausgangskörpers bei einer Temperatur geschieht, die nicht höher ist als 80 % der Metallschmelztemperatur, wobei anschließend die Temperatur des Ausgangskörpers verringert wird bis zu einem Wert, der in einem Bereich von 42 bis 45 % der Schmelztemperatur liegt; vor der Sättigung des Ausgangskörpers mit dem gasförmigen Deuterium erfolgt eine Gasmischung des gasförmigen Deuteriums mit der Atmosphärenluft, wobei der Anteil 0,1 bis 4,09 % des Volumenwertes der Gasmischung beträgt; diese Gasmischung wird in den Reaktor mit einer Geschwindigkeit eingelassen, welche die Erwärmung des Ausgangskörpers um 50 bis 200 Grad pro Sekunde sicherstellt; die dabei verwendete Vorrichtung umfasst den Reaktor selbst, eine Anlage zur Evakuierung des Innenraums des Reaktors, eine Anlage zur Erwärmung und zur Kühlung des Ausgangskörpers in dem Reaktor, einer Anlage zur Temperaturmessung des Ausgangskörpers, einem Drucksensor, einer Quelle der Arbeitsmasse, die das gasförmige Deuterium beinhaltet, und einer Anlage zum Einlass der Arbeitsmasse in den Reaktor, wobei in die Arbeitsmasse eine Menge von Atmosphärenluft in einem Verhältnis von 0,1 bis 4,09 % vom Gesamtvolumen der Arbeitsmasse beigefügt wurde.

Fig.2

EP 2 701 157 A2

**Beschreibung**

Die Erfindung betrifft das Gebiet der Kernfusion und insbesondere ein Verfahren sowie eine Vorrichtung zur Durchführung einer kalten Kernfusion unter Verwendung von Deuterium, absorbiert durch ein Gitter eines Ausgangskörpers mit der Eigenschaft der Wasserstoffaufnahme, unter vakuum-thermischer Entgasung des in einem Reaktor angebrachten Ausgangskörpers zwecks des Erreichens eines balancierten Drucks des verbleibenden Gases in dem Reaktor von nicht mehr als 1 Pa, unter weiterer Verringerung der Temperatur des Ausgangskörpers bis zum Zeitpunkt des Erreichens einer Zusammensetzung des Ausgangskörpers, welcher einer Gamma-Phase ähnelt, durch den Einlass des obenerwähnten, gasförmigen Deuteriums in den Forschungsreaktor sowie das Initiieren der Kernfusion.

Verfahren zur Kernfusion allgemein sind an sich seit langem bereits bekannt. Besonderes Interesse findet seit ca. 24 Jahren die Thematik der kalten Kernfusion. Zahlreiche Institute und Forschungszentren weltweit untersuchen intensiv diese Thematik, da man sich so beispielsweise erhofft, eine Lösung der Energieproblematik zu finden. Bei der Thematik der kalten Kernfusion wurden insbesondere die Varianten der Elektrolysemethode, die Gasbeladungsmethode, die Gasentladungsmethode, die Elektrodiffusionsmethode und die Schallmethode entwickelt. Eine umfassende Zusammenfassung zu diesem Sachverhalt findet man beispielsweise unter http://www.lenr-canr.org, wobei LENR für "Low Energy Nuclear Reactions" und CANR für "Chemically Assisted Nuclear Reactions" steht, was beides die kalte Kernfusion meint.

In der Fernsehsendung "alpha Centauri - Was ist der Tunneleffekt?"-http://www.br.de/fernsehen/br-alpha/sendungen/alpha-centauri/alpha-centauri-tunneleffekt-2003_x100.html - stellt der deutsche Astrophysiker Prof. Dr. Harald Lesch, u.a. Professor für Physik an der Ludwig-Maximilians-Universität München, die Zusammenhänge der "heißen" Kernfusion anschaulich dar. Daraus wird klar, dass selbst die Kernfusion in der Sonne nur aufgrund des Tunneleffektes stattfinden kann. Dies ist andererseits der Beweis, dass die Kernfusion grundsätzlich quantenmechanisch und nicht allein nach der klassischen Mechanik zu betrachten ist. Nach der klassischen Physik wäre die Sonne viel zu kalt für eine Kernfusion, würde also nicht strahlen - es gäbe kein Leben auf der Erde. Prof. Dr. Harald Lesch erklärt, dass es für die Kernfusion aufgrund des Tunneleffekts keine untere Temperaturgrenze gibt - mithin also auch eine "kalte" Kernfusion möglich ist.

Zur Durchführung der kalten Kernfusion besonders erfolgsversprechend scheint die sogenannte Gasbeladungsmethode zu sein, die auch dem erfindungsgemäßen Verfahren zugrunde liegt. Dabei wird in der Regel ein geeignetes (metallisches) Material (bspw. Pd, Nb, V, seltene Erden), das in der Lage ist, Wasserstoff oder Deuterium aufzunehmen in einem Foschungsreaktor plaziert und unter erhöhtem Druck und erhöhter Temperatur mit Deuterium umgesetzt. Dabei ist die Prozessführung der Methode von besonderer Bedeutung, da die falsche Auswahl der Prozessführung leicht zu Instabilitäten im System führt und somit die erwünschte Leistung minimiert wird. Bisher ist es noch nicht gelungen, in ausreichendem Maße eine kalte Kernfusion auf diese Weise zu starten.

Bei der Kernfusion von Deuterium beispielsweise, die auch für das erfindungsgemäße Verfahren relevant ist, sind unter anderem folgende allgemeine Fusionsreaktionswege bekannt, die aber nicht alle gleichzeitig und/oder gleichwertig ablaufen müssen schwerpunktmäßig spielen hier wohl eher die Reaktionswege 2 und 3 eine Rolle.

1. $D + D \rightarrow T + p$; $\Delta E = 4{,}0$ MeV
2. $D + D \rightarrow {}^{3}He + n$; $\Delta E = 3{,}3$ MeV
3. $D + D \rightarrow {}^{4}He + \gamma$; $\Delta E = 23{,}8 \div 24{,}8$ MeV

Frei werdende $\gamma$-Strahlung oder das erhöhte Registrieren von frei werdenden Neutronen wird als ein Indiz für das Stattfinden einer Kernfusion gesehen.

Weitere Untersuchungen zur sogenannten Gasbeladungsmethode sind aus dem Stand der Technik bekannt. Aus verschiedenen Druckschriften (z. B. aus den japanischen Offenlegungsschriften Nr. JP 03160395 A und JP 03160396 A, jeweils veröffentlicht am 10.07.1991; oder H. L. Fox: "Die kalte Problematik, der Einfluss auf die Welt, aus Sicht der USA", in "SVITEK", 1993, Seite 173) wird folgende Verfahrensweise beschrieben:

Dabei soll zuerst ein Ausgangsmuster, z. B. ein Arbeitsmuster aus Palladium, einen gasförmigen Stoff aufnehmen, indem das besagte Pd-Muster in einen Reaktor eingebracht wird, und ein geeignetes Gas, hier Deuterium, in den Reaktor eingelassen wird, welches zur Durchführung der Reaktionen der Kernfusion geeignet ist.

Beim Einlassen des obengenannten Deuteriums in den Reaktor nimmt der Körper aus Pd das Deuterium bis zu einem annähernden Sättigungszustand auf, und sodann wird eine Kernfusion aktiviert.

In oben genanntem Verfahren erfolgt die Absorbtion des Deuteriums an Pd sowie auch die Initiierung der Kernfusion durch einzelne, aufeinanderfolgende Schritte. Die Absorbtion von Deuterium geschieht derart, dass sich das Ausgangsmuster aus Pd in der Umgebung des sättigenden Gases, nur sehr langsam absättigt und der gewünschte Sättigungszustand nur annähernd, aber nicht vollständig erreicht wird. Im Anschluss kommt es zu einer Initiierung einer Kernfusionsreaktion. Dieses obige Verfahren hat allerdings den Nachteil, dass die Kernfusionreaktion nur sehr niedrige Leistungs- und Intensitätswerte hat.

Annähernd ähnlich zu diesem beschriebenen Verfahren ist das in der folgenden Literaturstelle: "Laser-Induktions-Reaktion der kalten Kernfusion im System Metall-Gas für Ti-$D_2$-$H_2$-$T_2$" von I.L.Beltukov et al., in "Physik der Metalle und Metallkunde", 1992, Nr. 6, Seiten 138 bis 143, beschriebene Verfahren. Hier wird die Kernfusion ebenso unter Verwendung gasförmigen Deuteriums initiiert. Dabei wird das Deuterium an einem metallischen Kristallgitter absorbiert, wobei dieses Kristallgitter ebenso aus der Stoffgruppe der Metalle gewählt wurde, welche Wasserstoff gut aufnehmen können. In diesem Fall verwendete man als Metall Titan. Das Titan, welches bereits als Titanhydrid vorliegt, wird bei einer Temperatur von 600 - 1.100 °C bzw. 873 - 1.373 K vakuumthermisch solange entgast, bis im Reaktor ein ausgeglichener Druck an Restgas von nicht mehr als 1 Pa erreicht ist. Danach erfolgt die Abkühlung der Ti-Gitters bis zu einem Wert zwischen 550 - 590 °C bzw. Kernfusion: Das Wesen, die 823 - 863 K. Im Anschluss wird das Ti-Gitter mit Deuterium gesättigt. Das Einlassen des obengenannten Deuteriums in den Reaktor geschieht mit dem Ziel, eine Kernfusion zu initiieren. Dabei macht man sich jeweils eine periodische Veränderung der Temperatur des Ausgangskörpers und die daraus entstehende Veränderung der Wärmeintensität zunutze oder unterstützt den Prozess mittels einer laserimpulsiven Erwärmung des Ausgangskörpers.

Wie im obengenannten Prototyp-Verfahren wie auch in analogen bekannten Verfahren, verlaufen die Prozesse zur Sättigung des (metallischen) Ausgangskörpers durch gasförmiges Deuterium und folglich die Initiierung der Kernfusion sukzessive. Der Übertritt durch die Phasengrenzen des metallischen Ausgangskörpers geschieht dabei mit niedriger Geschwindigkeit. Der daraus resultierende Nachteil sind niedrige Leistungen und Intensitäten der Kernfusionsreaktionen.

Eine Vorrichtung zur Durchführung der Kernfusion, in der gasförmiges Deuterium an einem metallischen Titankristallgitter oder einem anderen Metall mit ähnlichen metallischen Eigenschaften absorbiert wird, ist beispielsweise in der Europäischen Patentschrift EP 0 394 204 B1, veröffentlicht am 20.09.1995, offenbart; siehe auch H. L. Fox: "Die kalte Kernfusion: Das Wesen, die Problematik, der Einfluss auf die Welt aus Sicht der USA", SVITEK 1993, Seiten 169 - 170. Diese Vorrichtung besteht aus einem Reagenzbehälter, der in eine thermisch kontrollierte Atmosphäre eingebracht worden ist. Im Inneren dieses Reagenzbehälters befindet sich das obengenannte Metall, eine Vorrichtung zur Evakuierung des Innenraums des Reagenzbehälters (z. B. eine Vakuumpumpe), je eine Vorrichtung zur Temperaturmessung (ein Thermosensor) und Druckmessung (ein Drucksensor), sowie ein Einlass für die Arbeitsmischung des gasförmigen Deuteriums, welcher mit dem Reagenzgefäss über einen drucksenkenden Reduktor sowie Zwischenklappen oder -Ventile kommuniziert.

Durch die obige Konstruktion erfolgt die Sättigung des metallischen Kristallgitters sehr langsam, da das gasförmige Deuterium den drucksenkenden Reduktor passieren muss.

In der Zusammensetzung der in den Reaktor eingeführten Arbeitsmischung sind dem Deuterium keine anderen Zusatzgase beigemischt, insbesondere weder Sauerstoff noch Stickstoff. Auch diese Vorrichtung zeigt nur eine niedrige Leistung und niedrigere Intensität der Kernfusionreaktion.

Der wohl am nächstenliegende Stand der Technik im Hinblick auf die erfindungsgemäße Anlage findet sich in der Beschreibung der Patentschrift RU 2 056 656 C1; veröffentlicht am 20.03.1996. In dieser Vorrichtung wird Deuterium an einem geeigneten metallischen Kristallgitter absorbiert. Sie besteht aus einem Reaktor und einem Eingangsstutzen. Im Inneren dieses Reaktors ist ein metallischer Musterkörper installiert sowie eine Vorrichtung zur Evakuierung des Innenraums des Reaktors. Eingangsdüsen können mit dem Inneren von Reaktionsdüsen durch ein erstes Ventil kommunizieren. Es ist eine Heizeinrichtung für den metallischen Ausgangskörper vorhanden, eine Vorrichtung zur Erfassung der Temperatur dieses Ausgangskörpers, eine Vorrichtung zur Messung des Drucks im Inneren des Reaktors, sowie eine Quelle, die mit dem einzubringenden gasförmigen Deuterium gefüllt ist. Eine weitere Durchgangsdüse kommuniziert dabei über ein zweites Ventil mit dem Inneren des Reaktors, um das gasförmige Deuterium in den Reaktor einzulassen. Auch die hier beschriebene Vorrichtung zeichnet sich durch zu niedrige Leistungen und Intensitäten aus.

Aus den obigen Nachteilen des beschriebenen Standes der Technik resultiert das die Erfindung initiierende Problem, ein Verfahren sowie einen dazu geeigneten Reaktor zur Kernfusion auf der Basis der sogenannten Gasbeladungsmethode zu entwickeln, wobei die Leistung und Intensität, insbesondere die frei werdende Energie, in Form von beispielsweise Strahlung erhöht wird und Neutronen freigesetzt werden. Die frei werdende Energie sollte beliebig nutzbar sein.

Die Lösung des Problems gelingt durch die vakuum-thermische Entgasung des in dem Reaktor angebrachten, Ausgangskörpers bei einer Temperatur, die nicht höher liegt als 80 % der Schmelztemperatur des Ausgangskörpers, wobei anschließend die Temperatur des Ausgangskörpers verringert wird bis zu einem Wert, der in einem Bereich von 42 bis 45 % der obigen Schmelztemperatur liegt. Vor der Sättigung des Ausgangskörpers mit dem gasförmigen Deuterium erfolgt eine Gasmischung des gasförmigen Deuteriums mit der Atmosphärenluft, wobei deren Anteil 0,1 bis 4,09 Vol.-% des Volumenwertes der Gasmischung beträgt. Diese Gasmischung wird in den Reaktor mit einer Geschwindigkeit eingelassen, welche die Erwärmung des Ausgangskörpers um 50 - 200 Grad pro Sekunde sicherstellt. Die dabei frei werdende Energie kann beispielsweise zur Stromerzeugung oder auch zur nuklearen Transmutation herangezogen werden.

Das erfindungsgemäße Verfahren der Kernfusion unterscheidet sich auch dadurch, dass der Anteil der Atmosphärenluft in der jeweiligen Mischung aus (Atmosphären)-Luft mit gasförmigem Deuterium unter einer Grenze von 1,0 bis 4,09 % bezogen auf das Gesamtvolumen der gewonnenen Gasmischung gehalten wird und die obengenannte Mischung mit einer Geschwindigkeit derart eingelassen wird, dass eine Erwärmung des Ausgangskörpers beispielsweise aus Titanhydrid bis zu 90 - 180 °C/s gewährleistet wird.

Durch die Einführung des zusätzlichen Schrittes in das Verfahren, eine Mischung aus gasförmigem Deuterium mit Atmosphärenluft in einem Anteil von 0,1 bis 4,09 % des Gesamtvolumens der Gasmischung, sowie durch das Einlassen dieser Mischung in den Reaktor mit einer derartigen Geschwindigkeit, welche im Laufe der Sättigung des Ausgangskörpers aus Titanhydrid durch das Deuterium eine Erwärmung des Ausgangskörpers bis um 50 - 200 °C hervorruft, sowie die anschließende Durchführung der vakuum-thermischen Entgasung des Ausgangskörpers im Reaktor bei einer Temperatur von nicht mehr als 90 % der Schmelztemperatur und durch darauffolgende Abkühlung des Ausgangskörpers bis zum einen Wert zwischen 42 und 45 % der Schmelztemperatur, lässt sich ein verbessertes Reaktionsergebnis registrieren, das heißt, eine gesteigerte Menge an frei werdender Energie bzw. Strahlung, und somit eine deutliche Verbesserung gegenüber dem Stand der Technik erzielen.

Eine mögliche Teilerklärung für die deutliche Verbesserung der Reaktionsergebnisse findet sich möglicherweise in dem Vorhandensein verschiedener Komponenten aus der Atmosphärenluft. Insbesondere das Vorhandensein von Sauerstoff und/oder Stickstoff scheint Einfluss auf den Ablauf der Kernfusionsreaktion zu haben. Es wäre aber auch denkbar, dass sonstige, in der Atmosphärenluft enthaltene Spurenstoffe einen bislang noch unerklärbaren Einfluss nehmen. Als Ergebnis wird der Grad der frei werdenden Strahlungsintensität erhöht, es wird mehr Wärmeenergie erzeugt und somit die gesamte Leistung der Kernfusionsreaktion gesteigert.

Die erfindungsgemäßen Verfahrensparameter sind optimiert und man stellt fest, dass Parameter außerhalb der jeweiligen Bereiche, sowohl niedrigere als auch höhere Werte als die vorgegebenen Temperaturbereiche, Konzentrationsbereiche usw., zu keiner Erhöhung oder sogar zu einer Herabsetzung der Leistung oder Intensität der Kernfusionsreaktion führen.

Dieses Phänomen erklärt sich aus der unzureichenden Zusammensetzung der Arbeitsmischung. Beispielsweise kann sich ein ungenügender Anteil von Sauerstoff- und/oder Stickstoffatomen negativ auf den Prozess auswirken.

Ist die Geschwindigkeit niedriger als die für das vorgeschlagene Verfahren erforderliche Geschwindigkeit (unter der die Mischung eingelassen wird), so findet eine unerwünschte Oxidation des Ausgangskörpers statt, welche vor dem Prozess der Kernfusionsreaktion abläuft und somit die Kernfusionreaktion vermindert oder gar verhindert und die Leistung bis auf das Niveau der in der Einleitung beschriebenen Verfahren herabsenkt.

Hinsichtlich des Anteils der Atmosphärenluft oder ähnlicher künstlicher Gasmischungen hat es sich gezeigt, dass sich bei einem Anteil derselben von mehr als 4,09 % am Gesamtvolumen der Gase die Intensität des Verfahrens nur geringfügig erhöht, wogegen sich das Explosionsrisiko bspw. gemäß Knallgasreaktion oder explosionsartiger Oxidation des Ausgangskörpers erhöht. Die Erhöhung der Geschwindigkeit beim Erwärmen des Ausgangskörpers bis zu einem Wert, der oberhalb der obengenannten Obergrenze liegt, führt zu einem Überwärmen des Ausgangskörpers und zum Verlust der Festigkeitseigenschaften des Ausgangskörpers sowie zu einem möglichen Schmelzen. Dies würde zu einer Veränderung der Eigenschaften des Ausgangskörpers führen und somit eine Kernfusionsreaktion verhindern.

Die Realisierung des vorgeschlagenen Verfahrens mit der oben beschriebenen Beimischung von Atmosphärenluft bzw. analogen Gasmischungen in den Grenzen von 90 - 200 °C/s, vorzugsweise 90 - 180 °C/s, bleibt im Hinblick auf die Effektivität dieses Verfahrens optimal.

Die gesteigerte Intensität bzw. die erhöhte, frei werdende Strahlung, insbesondere Neutronen- und/oder Gammastrahlung, kann vorteilhafterweise zur Erzeugung von Strom herangezogen werden, indem die abgeführte Energie genutzt wird und beispielsweise damit erzeugter Dampf zwecks Antriebs einer mit einem Elektrogenerator gekoppelten Turbine genutzt wird.

Ein weiterer, vorteilhafter Anwendungszweig der kalten Kernfusion könnte sein, dass die erhöhte Strahlung, insbesondere die frei werdende Neutronen- und/oder Gammastrahlung, zur Transmutation genutzt wird. Dabei ist insbesondere die nukleare Transmutation zur Umwandlung radioaktiver Isotope in andere (nicht radioaktive) Isotope wünschenswert. Beispielsweise könnte somit radioaktiver Abfall (Uran-Isotope oder ähnliche), wie er beispielsweise als Abfall bei Kernkraftwerken anfällt, effektiv entsorgt werden oder zumindest in minder gefährlichen Abfall umgewandelt werden.

Für eine optimale Ausführung des erfindungsgemäßen Verfahrens der kalten Kernfusion unter Verwendung gasförmigen Deuteriums, absorbiert an oder gelöst in einem geeignetem Kristallgitter mit der Eigenschaft der Wasserstoffaufnahme, hat sich eine Vorrichtung als vorteilhaft erwiesen, die aus folgenden Komponenten besteht:

- Zunächst einem Reaktor mit einem in dessen Inneren angebrachten metallischen und/oder metallhydridischen Ausgangskörper (vorzugsweise in komprimierter Pulverform);
- einer Einrichtung zur Evakuierung des Innenraums des Reaktors, deren Eingangsdüse (von der Anlage) mit dem Innenraum des Reaktors über mindestens ein (erstes) Ventil kommuniziert;

- einer Einrichtung zur Erwärmung und zur Kühlung des Ausgangskörpers in dem Reaktor;
- einer Einrichtung zur Temperaturmessung des Ausgangskörpers;
- einem Drucksensor;
- ferner einer Quelle der Arbeitsmasse, die das gasförmige Deuterium beinhaltet und deren Ausgangsdüse (von der Quelle) mit dem Innenraum des Reaktors über ein zweites Ventil kommuniziert;
- sowie einer Einrichtung zum Einlass der (gasförmigen) Arbeitsmasse in den Reaktor;
- und schließlich einer Einrichtung, um das Deuterium mit Atmosphärenluft zu mischen, insbesondere mit einer Menge von Atmosphärenluft, die einem Verhältnis von 0,1 - 4,09 Vol.-% vom Gesamtvolumen der Arbeitsmasse entspricht.

Weitere Vorteile der Vorrichtung zur Durchführung der Kernfusion resultieren daraus, dass die Quelle der Arbeitsmasse und die Anlage zum Einlassen der Arbeitsmasse in den Reaktor in Form eines Ballons mit Mischfunktion ausgeführt ist, der mit drei Anschlüssen, zwei zusätzlichen Ventilen und einem Druckmessgerät zur Druckmessung in diesem Ballon ausgestattet ist. Der erste Düsenanschluss des Ballons gilt als Ausgangsdüse der Arbeitsmasse, der zweite Düsenanschluss dieses Ballons mit dem ersten zusätzlichen Ventil gilt als Eingangsdüse zum Einlass der Atmosphärenluft oder analogen künstlichen Gasmischung, der dritte Düsenanschluss des Ballons mit dem zweiten zusätzlichen Ventil gilt als Eingangsdüse zum Einlassen des gasförmigen Deuteriums, und der Drucksensor im Ballon ist mit dem Druckmessgerät verbunden.

Die Erfindung empfiehlt, dass im Ballon mit Mischfunktion (Mischballon) noch ein vierter Düsenanschluss vorgesehen ist, der durch das erste Ventil mit dem Ausgangsanschluß des Evakuierungssystems im Inneren des Reaktors verbunden ist.

Weiterhin hat es sich als vorteilhaft erwiesen, dass in die Vorrichtung zur Durchführung einer Kernfusion ein zusätzlicher Ballon mit Atmosphärenluft oder einer analogen, künstlichen Gasmischung in einer Standardzusammensetzung eingesetzt ist, der als Quelle der Atmosphärenluft oder künstlichen Gasmischung gilt und der über das zweite zusätzliche Ventil mit der zweiten Düse des Mischballons kommuniziert. Des Weiteren kommuniziert noch das Druckmessgerät mit dem Reaktor.

Die Ausführung der Quelle der Arbeitsmasse und der Vorrichtung zum Einlassen der Arbeitsmasse in den Reaktor im Form eines selbständigen Ballons, der mit drei Stutzen, zwei zusätzlichen Ventilen und dem Drucksensor zur Druckmessung beim Anschließen dieses Ballons wie oben beschrieben ausgestattet ist, gilt als ausschlaggebende Bedingung für eine optimale Funktionsweise der Kernfusion.

Die Verbindung der Ausgangsdüse der Evakuierungsanlage des Reaktors mit dem vierten Anschluß des Mischballons über das erste Ventil bildet ein weiteres vorteilhaftes Merkmal der Erfindung, das den Aufbau des Reaktors vereinfacht, so dass zur Kommunikation mit dem Inneren nur noch eine Düse erforderlich ist, die über das zweite Ventil mit dem Mischballon verbunden ist.

Das Einfügen eines zusätzlichen Ballons mit Atmosphärenluft oder mit einer analogen künstlichen Gasmischung, die zumindest einen Bestandteil der Luft enthält, in die Vorrichtung, sichert deren Funktion dabei ohne direkten Kontakt zur Erdatmosphäre. Eine derartige Ausführung erweist sich jedenfalls als nützlich, wenn zum Beispiel ein Betrieb der erfindungsgemäßen Vorrichtung außerhalb der Erdatmosphäre erforderlich ist z.B. im Weltraum. Des Weiteren kommt es so auch unter normalen terrestrischen Bedingungen zu einem Schutz gegen mögliche unkontrollierte Störung der Parameter, beispielsweise gegen eine ungewollte Veränderung der Atmosphärenluft hinsichtlich Luftfeuchtigkeit, Druck, Temperatur, Zusammensetzung, Verunreinigung etc.

Es liegt im Rahmen der Erfindung, dass der erfindungsgemäße Reaktor mit einem Kühlsystem gekoppelt ist, welches die bei der Kernfusion frei werdende thermische Energie des Ausgangskörpers abführt und einer weiteren Nutzung zuführt. Beispielsweise kann mit der abgeführten Energie Dampf erzeugt werden, der einer Dampfturbine zugeleitet wird, welche an einen Stromgenerator gekoppelt ist. Das Kühlsystem kann z. B. in Form von Kühlschlangen oder Wärmetauschern ausgebildet sein, die den metallischen Ausgangskörper zumindest bereichsweise umgeben.

Die bei der Kernfusion frei werdende Strahlung, insbesondere die auftretende Neutronen- und/oder Gammastrahlung, kann zur Umwandlung von Atomkernen herangezogen werden. Dazu kann beispielsweise eine Lösung oder Suspension, die radioaktiven Abfall aus Kernkraftwerken enthält, in die Nähe der freiwerden Neutronen- und/oder Gammastrahlung gebracht werden, und die radioaktiven Kerne können damit beschossen worden. Somit kommt es zu einer Transmutation der radioaktiven Elemente in weniger schädliche Abfallstoffe.

Schließlich entspricht es der Lehre der Erfindung, dass die Vorrichtung an oder in dem Reaktor ein oder mehrere Kammern zur Aufnahme von umzuwandelnden Atomkernen umfasst. Dabei ist es vorteilhaft, wenn die Kammer(n) den (metallischen) Ausgangskörper zumindest bereichsweise umgeben, insbesondere in Form von hauben- oder kalottenförmigen Doppelschalen. Durch diese Konstruktion könnte gefährlicher radioaktiver Abfall unschädlich gemacht werden.

Weitere Merkmale, Eigenschaften, Vorteile und Wirkungen auf der Basis der Erfindung ergeben sich aus der folgenden Beschreibung bevorzugter Ausführungsformen der Erfindung sowie anhand der beigefügten Zeichnung. Hierbei zeigt:

Fig. 1    ein Phasendiagramm des Systems Ti-H;

Fig. 2    einen Schnitt durch einen erfindungsgemäßen Reaktor mit einem Arbeitsmuster;

Fig. 3    eine besondere, kalottenförmige Ausführung des Reaktors;

Fig. 4    einen Vertikalschnitt durch die Fig. 3;

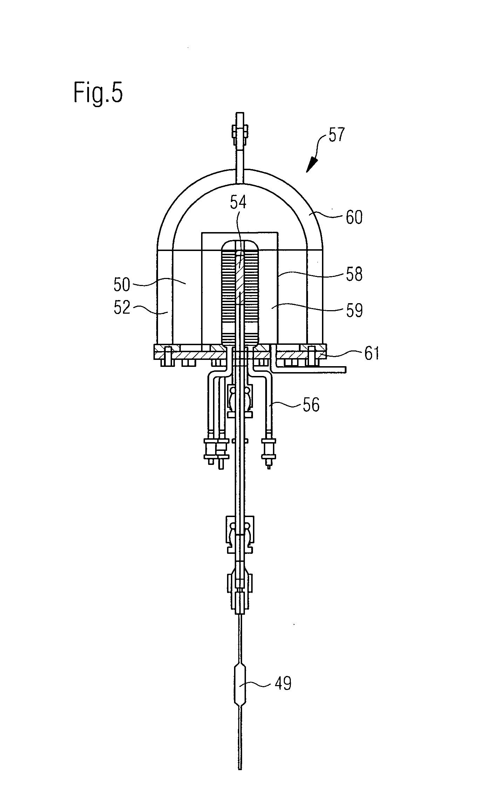

Fig. 5    eine abgewandelte Ausführungsform der Erfindung in einer der Fig. 4 entsprechenden Darstellung;

Fig. 6    einen Temperatur-/Zeit-Verlauf für ein metallisches Arbeitsmuster aus 6,9 g Titanhydrid (TiH$_{1,97}$) bei Einwirkung eines Arbeitsmediums in Form einer Deuterium-Luft-Mischung mit einem Luftanteil von 2 %; sowie

Fig.7    die Änderung der Neutronenimpulse (bzw. den Anstieg der Gammastrahlung) unter der Einwirkung der Deuterium-Luft-Mischung (2%) auf das obige Arbeitsmuster in dem Messzeitraum zischen 5000-7000s bei je 30 Messungen/s.

Die Erfinder haben herausgefunden, dass das erfindungsgemäße Verfahren besonders unter Verwendung einer Matrix aus Ti-Atomen besonders vorteilhafte Ergebnisse liefert. In einem Ti-Körper lässt sich sowohl H$_2$ als auch D$_2$ gut lösen. Ein Vorteil ist dabei, dass in der Lösung die Deuteriummoleküle D$_2$ sich in einzelne Deuteriumatome aufspalten. In einem Ti-Gitter zeigen sowohl H$_2$ als auch D$_2$ eine hohe Diffusionsrate, können sich also trotz des Gitters mit vergleichsweise hoher kinetischer Energie bewegen.

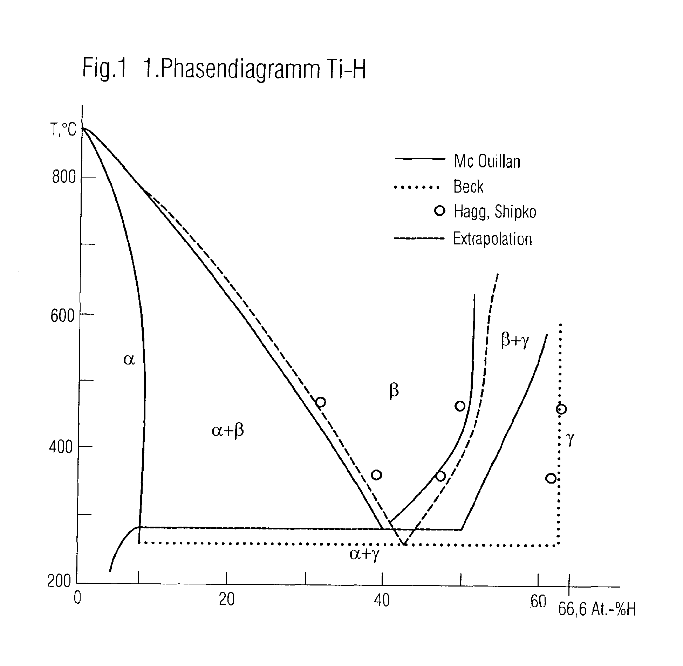

Allerdings ist das System Ti-H vergleichsweise komplex, wie das Phasendiagramm nach Fig. 1 zeigt, welches auf unabhängigen Untersuchungen verschiedener Forscher basiert:

Die durchgezogenen Linien entsprechen den Ergebnissen, welche von A. D. McQuillan gemessen und in seinem Aufsatz: "An Experimental and Thermodynamic Investigation oft he Hydrogen-Titanium-System" in 1950 veröffentlicht wurden, nämlich in Proc. Roy. Soc. (Lond.), Ser. A, 1950, v. 204, p. 309.

Die gestrichelten Linien entsprechen Extrapolationen der von A. D. McQuillan gefundenen Messergebnisse.

Die punktierten Linien wurden von R. L. Beck erforscht und in seinem Bericht: "Research and Development of metal Hydrides, Summary Report", Oct. 1, 1958-Sept. 30, 1960, USAEC Report LAR-10, pp. 60-65, 77-80, Denver Research Institute, Nov. 1960 veröffentlicht wurden.

Die kleinen Kreise repräsentieren Messergebnisse von R. M. Hagg und F. J. Shipko, zu finden unter "The Titanium-Hydrogen System" bei J. Amer. Chem. Soc., 1956, v. 78, p. 5155.

Wie man erkennen kann, stimmen die verschiedenen Messergebnisse relativ gut miteinander überein. Man kann daher aus diesen folgende Zusammenhänge herauslesen:

Während reines Ti nur 2 Modifikationen kennt, nämlich die α-Phase oder α-Ti und die β-Phase oder β-Ti, tritt bei Lösung von H oder D eine dritte Modifikation auf, nämlich die γ-Phase oder γ-Ti. Das Ti-Gitter hat bei allen drei Modifikationen eine jeweils andere Struktur:

α-Ti kristallisiert in einem hexagonal dichten Gitter;
β-Ti hat ein kubisch-raumzentriertes Gitter; und
γ-Ti verfügt über ein kubisch flächenzentriertes Gitter.

Wasserstoff- oder Deuterium-Kerne werden im jeweiligen Ti-Gitter auf Zwischengitterplätzen eingelagert, verdrängen also die Ti-Kerne nicht von ihren Gitterplätzen. Als Zwischengitterplätze stehen Oktaederlücken und Tetraederlücken zur Verfügung. Im Falle von Titan werden von H$_2$ oder D$_2$ primär die Tetraederlücken bevorzugt. Durch die Einlagerung von H$_2$ oder D$_2$ wird das Kristallgitter um bis zu 30 % aufgedehnt.

Betrachtet man das Phasendiagramm nach Fig. 1 im Detail, so kann man erkennen, dass der reine, unlegierte Ti-Kristall unterhalb von etwa 885 °C in Form einer hexagonal dichtgepackten α-Gefügestruktur vorliegt. Wird bei einer etwa konstant gehaltenen Temperatur von beispielsweise 600 °C der H$_2$ - oder D$_2$-Anteil kontinuierlich erhöht, so bewegt man sich im Ti-H-Phasendiagramm auf einer horizontalen Linie nach rechts. Der Kristall veränddert sich dabei zunächst von einer reinen α-Modifikation über eine (α+β)-Mischform zu einer reinen β-Modifikation und sodann weiter über eine (β+γ)-Mischform bis hin zur reinen γ-Modifikation. Bei den Mischformen liegen in dem betrachteten Körper gleichzeitig sowohl Körner mit einer ersten Modifikation als auch Körner mit einer anderen Modifikation bzw. Gefügestruktur vor.

Die γ-Phase entspricht dem Titanhydrid TiH$_2$ oder Titandeuterid TiD$_2$ und stellt den höchsten Sättigungsgrad von Wasserstoff oder Deuterium in Titan dar. In dem Phasendiagramm, wo auf der Abszisse Atomprozent (At.-%) von H oder D aufgetragen sind, also die Anzahl der H- oder D-Atome, bezogen jeweils auf alle Atome des betreffenden Kristalls. Dieser Wert erreicht bei $TiH_2$ bzw. $TiD_2$ mit 2/3 = 66,6 At.-% sein theoretisches Maximum. Eine solche γ-Struktur entspricht einer Fluoritstruktur, wenn man die $Ca^+$-Ionen den Ti-Kernen und die darin eingelagerten $F^-$-Ionen den H- oder D-Kernen gleichsetzt. In der Praxis lassen sich meist nur Werte von $TiH_{1,97}$ oder $TiD_{1,97}$ erreichen.

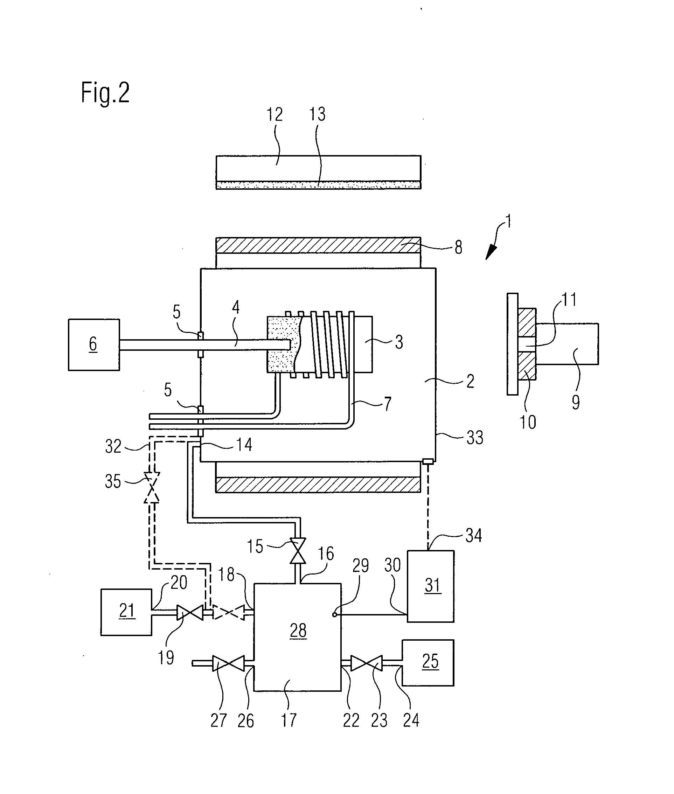

Das erfindungsgemäße Verfahren der Kernfusion läuft in der erfindungsgemäßen Vorrichtung, dem Reaktor 1 ab, der beispielhaft in Fig. 2 dargestellt ist. Im Innenraum 2 des Reaktors 1 befindet sich ein Arbeitsmuster 3. Spezielle Befestigungsmittel für den Ausgangskörper 3 in der Kammer 2 sind in der Zeichnung nicht gezeigt.

An der Öffnung des Ausgangskörpers 3 ist ein Temperatursensor, beispielsweise ein Thermoelement 4, angebracht, der mit einem ausserhalb des Kammerinneren 2 angebrachten Temperaturmessgerät 6, z.B. in Form eines Selbstschreibers vom Typ TZ-4620, gekoppelt sein kann und durch den Zugang 5 hermetisch zum Äußeren abgeriegelt ist. Bei einem Thermoelement handelt es sich um ein Bauteil aus zwei unterschiedlichen Metallen, die an einem Ende miteinander verbunden sind. Da der Stromkreis an einer zweiten Stelle geschlossen ist, gibt es eine zweite Kontaktstelle der unterschiedlichen Materialien. Während sich eine Kontaktstelle im Inneren der Kammer 2 des Reaktors 1 befindet, sitzt die andere außerhalb. Eine Temperaturdifferenz zwischen beiden Kontaktstellen erzeugt durch den Wärmefluss eine elektrische Spannung, die gemessen und ausgewertet werden kann, so dass aus der bekannten Temperatur der äußeren Kontaktstelle die Temperatur im Inneren des Reaktors 1 berechnet werden kann.

Um den Ausgangskörper 3 herum kann, je nach Anwendungsfall ein Wärmetauschgerät 7 angebracht sein, welches die frei werdende Wärme ableiten kann. Diese abgeleitete Wärme kann dann beispielsweise zur Erzeugung von Dampf herangezogen werden, der über eine Turbine einen Stromgenerator antreiben soll. Um den Ausgangskörper 3 aufzuheizen oder auch ggf. abzukühlen, ist außerhalb des Reaktors 1 eine Heizeinrichtung 8 in Form eines Heizmantels oder einer sonstigen Ummantelung (symbolisch gezeichnet) aus einem isolierten Draht innerhalb einer rostfreien Hülle angebracht. Diese Heizeinrichtung bzw. Ummantelung 8 ist mit einer Wechselspannungquelle und einem hochpräzisen Temperaturregler, bspw. vom Typ WRT-3 (russ. Bezeichnung BPT-3) verbunden, was in der Zeichnung ebenfalls nicht dargestellt ist.

Neben dem Reaktor 1 sind Messgeräte zur Registrierung der frei werdenden Neutronen- und/oder Gammastrahlen angebracht. Zur Registrierung der Gammastrahlung ist ein Scintillationsdetektor 9 auf Basis eines Monokristalls Nal (TI) mit einem Bleimonitor 10 geeignet, der eine Öffnung 11 aufweist. Die Registrierung der Neutronen-Bestrahlung dagegen geschieht durch mehrere Zähler 12 für langsame Neutronen Typ SI-19 H (russ. Bez.СИ -19 H) mit einem Neutronen-Polyethylenverlangsamer 13. Zuvor erfolgte eine Kalibrierung der Srtahlungsmessgeräte 12 mit $^{252}$Cf und $^{60}$Co.

Ein erster Düsenanschluss 14 des Reaktors 1 ist über ein Ventil 15 mit einem Anschluss 16 eines Mischballons 17 verbunden, welcher in diesem Fall als Quelle der Arbeitsmasse, einer Mischung aus gasförmigem Deuterium und Atmosphärenluft, dienen soll.

Ein zweiter Düsenanschluss 18 des Ballons 17 ist über ein Ventil 19 mit einem Anschluss 20 einer Vakuumpumpe verbunden.

Ein dritter Düsenanschluss 22 des Mischballons 17 ist über ein Ventil 23 mit einem Anschluss 24 eines Ballons 25 für das gasförmige Deuterium verbunden. Ein Düsenanschluss 26 eines Ventils 27 gilt als Eingangsleitung in den Innenraum 28 des Ballons 17, der die Atmosphärenluft dadurch aus der die Vorrichtung umgebenden Atmosphäre bezieht. Der Düsenanschluss 26 kann über das Ventil 27 auch mit einem zusätzlichen Ballon verbunden sein, der Atmosphärenluft mit einer Standardzusammensetzung enthält oder eine künstliche Gasmischung mit einem oder mehreren Bestandteilen der Atmosphärenluft (in der Zeichnung nicht dargestellt). Im Innenraum 28 des Mischballons 17 befindet sich ein Drucksensor 29 zur Messung des Drucks im Ballon 17, der mit dem Eingang 30 eines Druckmessgeräts 31 verbunden ist. Als Drucksensoren 29 und 33 können Drucksensoren vom Typ "Saphir" verwendet werden, und als Druckmessgerät 31 ein Selbstschreiber vom Typ TZ-4620.

Im Rahmen einer weiteren Ausführungsform kann die Düse 20 der Pumpe 21 über das Ventil 19 mit einer zusätzlichen Düse 32 des Reaktors 1 und über die Ventile 19 und 35 mit der Düse 18 des Ballons 17 verbunden werden. Im Innenraum 2 des Reaktors 1 kann ein zusätzlicher Drucksensor 33 zur Druckmessung in dieser Kammer angebracht werden, welcher mit einem zweiten Eingang 34 des Druckmessgeräts 31 verbunden ist. Die erwähnten Anschlüsse sind in der Zeichnung durch eine gestrichelte Linie angedeutet.

Bei einer anderen Ausführungsform der erfindungsgemäßen Einrichtung kann als Quelle der Arbeitsmasse (Masse aus gasförmigem Deuterium und Atmosphärenluft) und zum Einlass der Arbeitsmasse in den Reaktor 1 anstelle des Mischballons 17 mit dem Drucksensor 29, welcher eine Ausgangsdüse 16 und mehrere Eingangsdüsen 18, 22, 26 aufweist, auch ein Ballon mit der Arbeitsmasse mit der obenerwähnten Beimischung und unter dem oben beschriebenem Druck verwendet werden, der nur eine Ausgangsdüse des obenerwähnten Durchmessers aufweist, und der über ein Ventil mit dem Innenraum 2 des Reaktors kommuniziert (in der Zeichnung nicht dargestellt). Ein solcher Ballon genügt für eine einmalige Anwendung des vorgeschlagenen Verfahrens zur Durchführung der Kernfusion.

Die Vakuumpumpe 21 ist mit einem Dampffilter/Kühlfalle zur Aufnahme von Vakuumöldämpfen mit flüssigem Stickstoff ausgestattet. Dadurch soll der Musterkörper 3 gegen eine zufällige Einwirkung von Öldämpfen während der Entgasung geschützt werden.

Die erfindungsgemäße Vorrichtung, die in der Zeichnung dargestellt ist, funktioniert auf folgende Weise:

Wir betrachten die Variante mit dem Anschluß der Vakuumpumpe 21 durch die Düse 20, 18 und das Ventil 19 nur an den Innenraum des Mischballons 17. Dabei können entweder alle zwei Drucksensorn 29 und 30 verwendet werden, oder nur der Drucksensor 29, welcher sich im Innenraum 28 des Ballons 17 befindet.

Als Musterkörper 3 wird ein zylindrischer Körper aus Titanhydrid $TiH_{1,97}$ genommen, der aus einem Pulver durch thermische Pressung hergestellt worden ist und der somit eine große Oberfläche aufweist. Für die beispielhafte Ausführung des erfindungsgemäßen Verfahrens wurde ein Musterkörper 3 mit der Masse 7 g und mit der Oberfläche 574 $cm^2$ verwendet.

Nachdem der Musterkörper 3 und das Thermoelement 4 in den Innenraum 2 des Reaktors 1 eingebracht worden sind und die Kammer hermetisch abgeschlossen wurde, werden die Ventile 15 und 19 geöffnet und der Musterkörper 3 wird durch Einschalten der Pumpe und gleichzeitige Erwärmung der Heizeinrichtung 8 bis auf einen Grenzwert von 1.073 K vakuum-thermisch entgast, wobei die 90-prozentige Grenze der Titanschmelztemperatur von 1953 K nicht überschritten werden darf. Die Temperatur des Ausgangskörpers 3 wird durch das Thermoelement 4 und das Temperaturmessgerät 6 kontrolliert. Um das vorzeitige Sprengen des Ausgangsmusters 3 zu vermeiden, wird die Temperatur nicht schneller als 100 Grad in jeweils 10 Minuten erhöht. Als Endpunkt der vakuum-thermischen Entgasung gilt das Erreichen eines ausgeglichenen Restdrucks der verbleibenden Gase in der Kammer 1, der weniger als 1 Pa ohne Pumpen betragen sollte. Der Druckwert im Innenraum 2 der Kammer 1 kann mit Hilfe von Drucksensor 29 oder 33 kontrolliert werden, welche an das Druckmessgerät 31 angeschlossen sind.

Sobald der angestrebte Entgasungspunkt erreicht wurde, wird die Temperatur des Körpers 3 durch Verringerung der Wärmeintensität der als Heizeinrichtung 8 verwendeten Wärmeumwicklung bis auf 848 K heruntergesetzt.

Nachdem der Körper 3 entgast wurde, wird die erforderliche Arbeitsmasse aus gasförmigem Deuterium und Atmosphärenluft im Ballon 17 vorbereitet. Zur Gewährleistung der nachfolgender Erwärmung der Gesamtmasse der gasförmigen Mischung während des Hinzufügens zu dem Körper 3 (durch Einlassen der Gasmischung aus dem Ballon 17 in die Kammer 1) wird der Umfang der Gasmischung abhänging von der Flächengröße der gesamten Oberfläche des Körpers 3 wie folgt ermittelt. Für jeden Quadratzentimeter der Oberfläche des Körpers 3 sind $(8,2 \pm 0,2)$ $ncm^3$ der Gasmischung erforderlich. Unter der Einheit $ncm^3$ (Normkubikzentimeter) der Gasmischung versteht sich eine Gasvolumengröße in einem $cm^3$ unter Normalbedingungen (Temp. = 0 °C oder 273,15 K; p = 101325 Pa). Für den Probenkörper 3 mit einer Masse von 7g und einer Oberflächengröße von 574 $cm^2$ sind somit im Ballon 17 insgesamt 4700 $ncm^3$ der Gasmischung vorzubereiten. Zur Eingabe dieser Gasmischung in den Innenraum 2 der Kammer 1 mit der erforderlichen Geschwindigkeit bei einem Durchmesser der Düse 16 (oder 14) von 10 mm benötigt man einen Druck der vorbereiteten Gasmischung im Ballon 17 von 3284327 Pa (3,28 MPa). Dazu benötigt man einen Volumenwert 28 des Ballons 17 von 145 $cm^3$.

Zur Zubereitung der Gasmischung wird gasförmiges Deuterium mit einer Reinheit von nicht weniger als 99,99% Vol.-% und eine trockene Atmosphärenluft der Standardzusammensetzung (in folgendem Verhältnis: Stickstoff: 78,08, Sauerstoff: 20,96, Argon: 0,93, Kohlenstoffdioxid: 0,03) herangezogen.

Als Ergebnis der Entgasung des Körpers 3 kommt es zu einem Vakuum in den Innenräumen 2 und 28 in der Kammer 1 und dem Ballon 17.

Nachdem der Endpunkt der Entgasung des Körpers 3 erreicht wurde, werden die Ventile 15 und 19 geschlossen und die Gasmischung im Ballon 17 wird zubereitet. Dazu wird das Ventil 27 geöffnet und in den Innenraum 28 des Ballons 17 eine gewisse Menge von Atmosphärenluft eingelassen, die durch das Druckmessgerät 28 mit Hilfe des Drucksensors 29 kontrolliert wird. Bei der beschriebenen Ausführung dieser Vorrichtung und einem erforderlichen Volumenwert der Gasmischung von 4700 $cm^3$ und einem Anteil der Atmosphärenluft von 1,5 Vol.-% an dem gesamten benötigten Volumen der Gasmischung wird in den Ballon 17 Atmosphärenluft eingelassen, um einen Druckwert von etwa 49265 Pa zu erreichen.

Danach wird das Ventil 27 geschlossen und das Ventil 23 geöffnet, um das gasförmige Deuterium aus dem Ballon 25 in den Innenraum 28 des Ballons 17 einzulassen. Dabei wird der Druckwert im Innenraum 28 kontrolliert. Sobald ein Druck im Innenraum 28 mit einem Wert in Höhe von 3,28 MPa erreicht wurde, wird das Ventil 23 zugedreht. Es wird 10 Minuten gewartet, bis sich die Gase im Ballon 17 zu einer erforderlichen Gasmischung aus der Atmosphärenluft (1,5 Vol.-%) und dem gasförmigen Deuterium (98,5 Vol.-%) vermischt haben. Die Vorbereitetung der Gasmischung ist fertig.

Vor dem Einlassen der Gasmischung in den Innenraum der Kammer 1 werden die Messgeräte zur Detektion der Neutronen- und Gammastrahlung eingeschaltet. Danach erfolgt die Sättigung des Ausgangskörpers 3 durch Einlassen der zuvor vorbereiteten Gasmischung in den Innenraum 2 des Reaktors 1, indem das Ventil 15 geöffnet wird.

Der Ausgangskörper 3 wird durch das Deuterium gesättigt, bis seine Zusammensetzung einer Gammaphase entspricht. Der Ausgangskörper 3 erwärmt sich dabei mit einer Geschwindigkeit von 183 Grad pro Sekunde bis zu einer Temperatur von 1398 K. Im Laufe der oben beschriebenen Sättigung des Ausgangskörpers 3 kommt es zu einer schnellen Veränderung der Zusammensetzung des Ausgangskörpers, es findet ein Übergang von der $\alpha$-Phase über den zweiphasen $\alpha+\beta$-Übergang zu der $\gamma$-Phase statt. Dabei wird die Kernfusionnreaktion initiiert.

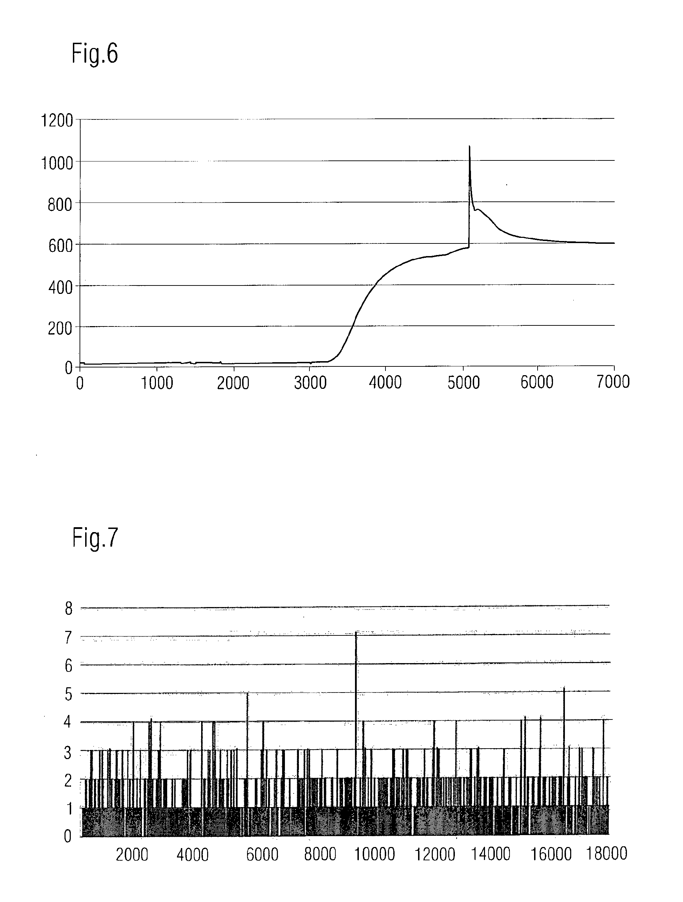

Ab dem Beginn des Sättigungzustandes des Ausgangskörpers durch das Deuterium innerhalb von weniger als 400 Sekunden wird die Heizintensität der Heizeinrichtung 8 erst konstant gehalten und es werden die Temperatur des Ausgangskörpers sowie die Intensität der entstehenden Gamma-Strahlen gemessen (siehe dazu auch Fig. 7). Innerhalb der oben erwähnten Zeitperiode nimmt der Ausgangskörper 3 die Bestandteile der Gasmischung (Deuterium, Sauerstoff und Stickstoff und evtl. andere Bestandteile der Luft) auf und somit findet - wie die entstehende Gammastrahlung anzeigt - eine Kernfusionsreaktion statt.

Der Druck in dem Reaktor 1 fällt bis auf einen etwa konstanten Wert von 454215 Pa. Danach kann der oben beschriebene Zyklus der Durchführung des Verfahrens, beginnend ab der Entgasung des Ausgangskörpers, wiederholt werden.

Als Ergebnis des oben beschriebenen Verfahrens wurden 7 Impulsströmungen der Neutronen-Strahlen mit einer Dauer nicht länger als 0,5 Sekunden erzeugt, was im Durchschnitt den normalen Zustand um das 32-fache übersteigt.

Laut der Umrechnung der Datenanzeigenempfindlichkeit der Neutronen aus der Californium-Quelle $^{252}$Cf liegt diese Zahl bei ca. 500 Neutronen pro Sekunde in der Neutronenströmung bei einer Dauer von nicht länger als 0,5 Sekunden.

Es wurde auch eine Impulsströmung der Gamma-Strahlen gemessen, die einen normalen Zustand um das Zweifache übersteigt. Die Maximaltemperatur des Ausgangskörpers 3 lag bei 1.398 K.

Viele Metalle oder Legierungen sind in der Lage, Wasserstoff aufzunehmen bzw. einzulagern. Dabei wird der Wasserstoff zwischen den Metallatomen aufgenommen und/oder chemisch gebunden. Zur Herstellung des Ausgangskörpers 3 und zur Durchführung des oben beschriebenen Verfahrens eignen sich vorzugsweise alle Metalle, intermetallische Verbindungen und/oder Legierungen, die in der Lage sind Wasserstoff oder auch seine Isotopen aufzunehmen. Diese Eigenschaften der metallartigen Metallhydride zeigen sich vor allen Dingen bei Hydridverbindungen von normalen Übergangsmetallen sowie auch bei Metallen der 4f-Gruppe (Lanthanoiden). Als Beispiele dafür sein Zirkonium, Palladium, Niob, Cer, Titan usw. genannt. Diese beschriebenen Einlagerungsverbindungen mit Wasserstoff werden als Metallhydride oder auch Metall-Wasserstofflegierungen oder auch als metallische Hydride bezeichnet und sind zumeist nicht stöchiometrisch. Die meisten dieser Verbindungen haben metalisches Aussehen und Leiter-oder Halbleitereigenschaften. Das Strukturprinzip dieser Verbindungen ist wie folgt: Die dichteste Kugelpackung des jeweiligen Metalls wird in seinen Lücken mit Wasserstoffatomen aufgefüllt. Bei der Einlagerung in eine Packung von N Metallatomen können maximal 2 N Tetraederlücken und N Oktaederlücken besetzt werden. Beim sukzessiven Einbau von Wasserstoffatomen bildet sich zunächst eine sogenannte feste Lösung, die sogenannte $\alpha$-Phase, bei der die Metallstruktur unverändert erhalten bleibt. Bei Normalbedingungen kann die Beweglichkeit der eingefügten Wasserstoffatome dort mit denen in einer Flüssigkeit gleichgesetzt werden. Bei Erhöhung von $H_2$-Druck und Temperatur findet ein fortschreitender Einbau von Wasserstoffatomen bevorzugt in die Tetraeder-Lücken statt (Bildung der $\beta$-Phase). Dabei ist zu beachten, dass manche Strukturen sich kompliziert verhalten, da sowohl Übergangsstrukturen als auch individuell verzerrte Strukturen beobachtet werden. Das Strukturverhalten bei hohen Temperaturen scheint noch nicht im ausreichenden Maße bekannt zu sein. Für die Lanthanoiden ist beispielsweise bekannt, dass die Bildung von Lanthantrihydrid möglich ist, bei der es auch zur Besetzung der Oktaederlücken kommt, was mit weiterer Strukturverzerrung bzw. -änderung einhergeht. Bei hohen Temperaturen ist desweiteren anzunehmen, dass die Eigenschaften der eingelagerten Wasserstoffatome sich bereichsweise dem Gaszustand annähern und daher optimale Bedingungen beispielsweise in Bezug auf die Stoßgeschwindigkeit der Wasserstoffatome untereinander erreicht werden können. Diese Annahme wird beispielsweise dadurch gestützt, dass für die Wasserstoffeinlagerungsverbindung von Niob bei lediglich Raumtemperatur bereits bekannt ist, dass ein eingelagertes Wasserstoffatom einen Platzwechsel von $10^{11}$ bis $10^{12}$ mal pro Sekunde ausführt. Die Bindungsverhältnisse der obig diskutierten Metallhydride sind zum jetzigen Zeitpunkt noch nicht ausreichend verstanden. Es wird allerdings diskutiert, dass auch der atomar eingelagerte Wasserstoff Elektronen ins Leitungsband abgeben kann, was bedeuten würde, dass im metallischen Kristall auch Wasserstoffrümpfe bzw. Kerne einzeln vorhanden sein können, die einer Annäherung unterzogen werden können. (aus Moderne Anorganische Chemie, R. Alsfasser, C. Janiak, T.M. Klapötke, H.J. Meyer, 3. Auflage, 2007).

Im Rahmen der Erfindung ist es auch möglich, dass der Ausgangskörper 3 anfänglich nicht aus den oben beschriebenen reinen Metallen o.ä. gebildet wird, sondern ein bereits zuvor hergestelltes Metallhydrid zur Herstellung des Ausgangskörpers 3 benutzt wird. Als besonders geeignet hat sich, wie im Versuchsaufbau bereits beschrieben, Titanhydrid gezeigt. Titanhydrid kristallisiert normalerweise im Bereich von TiH bis $TiH_2$ in der sogenannten Fluorit-Struktur. (aus Moderne Anorganische Chemie, Ralf Alsfasser, C. Janiak, T. M. Klapötke, H. J. Meyer, 3. Auflage, 2007). Für den Versuchsaufbau wird anfänglich $TiH_{1,97}$ herangezogen.

Desweiteren ist allgemein gültig für obigen wasserstoffspeichernde Metalle, dass wenn ein wasserstoffspeicherndes Metall mit Wasserstoff umgesetzt wird, dass der molekulare Wasserstoff zunächst an der Metalloberfläche adsorbiert wird. Dort kommt es zu einer homolytischen Trennung von $H_2$ und Wasserstoff diffundiert ins Innere des Gitters. Dort wird dann der Wasserstoff in Form von atomaren Wasserstoffs auf die Zwischengitterplätze (bspw. Tetraederlücken und/oder Oktaederlücken) des Wirtskristalls bzw. der dichtesten Kugelpackung eingelagert.

Beim Einbau des Wasserstoffes kann es je nach Menge des eingebauten Wasserstoffs zu einer Aufweitung und Verzerrung des Wirtsgitters kommen, die bis zu 30 % des Urmetalls betragen kann.

Grundsätzlich bestimmt die Menge des eingelagerten Wasserstoffs die Eigenschaften des zu betrachtenen Festkörpers. Dabei ist die Aufnahmekapazität zur Wasserstoffeinlagerung enorm. Bei geringen Mengen an eingelagertem Wasserstoff liegt die sogenannte $\alpha$-Phase vor, die auch als Löslickeitsbereich bezeichnet wird. Erhöht sich nun die Menge an eingelagertem Wasserstoff, so geht der Festkörper in die $\beta$-Phase über. Die Umsetzung obiger Metalle mit Wasserstoff (oder seinen Isotopen) ist ein reversibler Prozess. Der Beladungsgrad wird somit stark von Temperatur und Druck beeinflusst, wobei deren Einflüsse gegenläufig sind. Bei hoher Temperatur verschiebt und niedrigem Druck verschiebt sich das Gleichgewicht auf die Seite von Metall und gasförmigen, molekularem Wasserstoff. Hoher Druck und möglichst niedrigere Temperaturen begünstigen die Hydridbildung bzw. Einlagerung des Wasserstoffs in das Metall.

Wird nun zur Herstellung des Ausgangskörpers 3 Titanhydrid verwendet, so scheint die entstandene Aufweitung und Verzerrung des Kristallgitters besonders günstig für das Entstehen der Kernfusion zu sein. Bis zu einer Temperatur bis 600°C dehnt sich das Gitter gar noch weiter aus und unter dem Einfluss des hohen Gasdrucks um den Ausgangskörper herum, kommt es zu Bildung einer $\gamma$-Phase im Titanhydrid, die wohl ein essentieller Punkt für das erfolgreiche Zustandekommen der Kernfusion zu sein scheint. Weiterhin vorteilhaft ist, wenn das verwendete Titanhydrid eine möglichst große Oberfläche besitzt, um soviel $H_2$ wie möglich dort zu adsorbieren, und dann im nächsten Schritt in das Kristallgitter hineinzu diffundieren. Dies gelingt erfindungsgemäß durch die Verwendung von pulverförmigen Material, welches in die Form des Ausgangskörper 3 gepresst wird.

Beim Vorbereiten des Arbeitskörpers 3 kann $H_2$ verwendet werden zwecks Bildung von Titandihydrid $TiH_2$. Nach der Entgasung entweicht der dabei zunächst interstitiell eingelagerte Wasserstoff und hinterlässt dabei eine größere Anzahl von Poren, mithin einen Arbeitskörper mit einer großen (inneren) Oberfläche, so dass in einem späteren Schritt Deuterium schnell in den Arbeitskörper 3 hineindiffundieren kann.

Die Erfinder haben nun herausgefunden, dass sich Deuterium bei der Einlagerung in ein Metall ähnlich verhält wie Wasserstoff, und haben aufgrund dieser Erkenntnis das nun folgend beschriebene Verfahren entwickelt.

Beim Anschluss des Stutzens 20 an die Pumpe 21 über die Ventile 19 und 35 an einen zusätzlichen Stutzen des Reaktors 1 und des Stutzens 18 des Ballons über die Ventile 19 und 36 kann die vakuum-thermische Entgasung des Ausgangskörpers 3 bei offenen Ventilen 19 und 35 und bei geschlossenen Ventilen 15 und 36 durchgeführt werden; gleichzeitig mit der Entgasung des Ausgangskörpers 3 kann dabei die Vorbereitung der Gasmischung im Mischballon 17 laufen. Bei Verwendung eines zusätzlichen Ballons (in der Zeichnung nicht dargestellt) mit Atmosphärenluft kann die Atmosphärenluft in den Ballon 17 durch das Ventil 27 und die Düse 26 aus diesem zusätzlichen Ballon eingelassen werden.

Zum Abgreifen der Wärmeenergie, die bei der Durchführung dieses Verfahrens entsteht, kann ein Wärmetauschgerät verwendet werden, insbesondere mit einem flüssigen oder vorzugsweise gasförmigen Arbeitsmedium.

Ein Wärmetauschgerät zur Abführung anfallender, Wärmeenergie kann in thermischem Kontakt mit dem Ausgangskörper 3 und/oder mit der Deuterium-Arbeitsmasse in dem Reaktor 1 und/oder mit dem Gehäuse des Reaktors 1 stehen.

Das beschriebene Verfahren wurde mit einer Erwärmungsgeschwindigkeit des Ausgangskörpers von 183 Grad pro Sekunde bei jeweils den folgenden vier Werten des Anteils der Atmosphärenluft in der Gasmischung (jeweils angegeben in Vol.-%, bezogen auf das Gesamtvolumen der Gasmischung): 0,1; 1,0; 4,0; 4,09 durchgeführt. Außerdem wurden noch zwei weitere Varianten des Verfahrens durchgeführt: Bei einem Anteil der Atmosphärenluft von 0,1 Vol.-% und einer Erwärmungsgeschwindigkeit des Ausgangskörpers von 50 Grad pro Sekunde, sowie bei einem Anteil der Atmosphärenluft von 4,0 Vol.-% und einer Erwärmungsgeschwindigkeit des Ausgangskörpers von 200 Grad pro Sekunde. Bei diesen sechs Durchführungsarten des Verfahrens wurden die obenerwähnten Ergebnisse (Maximaltemperatur des Ausgangskörpers durch die Deuteriumsättigung, Intensität der Neutronen- und Gamma-Strahlen) mit einer Varianz in den Grenzen von $\pm$ 20 % festgestellt.

Zum Vergleich wurde in der Einrichtung mit dem Ausgangskörper 3 aus Titanhydrids ein Verfahren durchgeführt, was dem bekanntem Stand der Technik entspricht, wobei nur reines Deuterium ohne Zusatz von Luft in den Reaktor 1 eingelassen wird. Die Maximaltemperatur der Erwärmung des Ausgangskörpers 3 durch die Sättigung mit reinem Deuterium lag bei 1.353 K und war somit unverändert. Es wurden Impulsströmungen der Neutronen-Strahlen festgestellt, die den Normalzustand um das 18-fache überstiegen. Die Impulsströmungen der Gamma-Strahlen überstiegen den Normalzustand um das Zweifache. Bei der Wiederholung dieser Messung lag die Differenz der Ergebnisdaten um bis zu 50 % niedriger als die zuvor festgestellten Ergebnisse.

Somit wird bei dem erfindungsgemäßen Verfahren im Vergleich zum Stand der Technik eine Steigerung der Neutronenstrahlungsintensität um fast 60 % erreicht, eine Steigerung der Durchführung der Kernreaktionen um mehr als das Zweifache, und eine Steigerung der Erwärmungstemperatur des Ausgangskörpers um fast 45 °C. Der Temperaturanstieg des Ausgangskörpers 3 des erfindungsgemäßen Verfahrens ist in Fig. 6 dargestellt.

Eine mögliche theoretische Erklärung für das Stattfinden einer Kernfusion unter obigen Bedingungen, kann gemäß den Auswertungen und Berechnungen des Erfinders wie folgt lauten:

Grundsätzlich gilt, dass zum Stattfinden einer Kernfusionsreaktion die energetische Vorraussetzung erfüllt sein muß, dass zwei Teilchen derart (frontal) zusammenstoßen, dass ausreichend Energie mitgebracht wird, um die potentielle Energie der coulombschen Abstoßung zu überwinden. Wäre der jeweilige Stoß nicht energiereich genug, so würde es bei der Kollision der betrachteten Teilchen irgendwann ein Bereich der Abstoßung erreicht werden und die Teilchen in Form eines (elastischen) Stoßes ohne Eintreten einer Reaktion wieder auseinander driften. Für zwei Wasserstoffatome beispielsweise beträgt der sog. Coulombwall, also das bei einer Annäherung zu überwindende, abstoßende Coulomb-Potential $U_{Abstoß,H}$ = 513,43 keV. Betrachtet man dagegen das gleiche Coulomb-Potential für zwei Deuterium-Atome, so ist der Wert mit $U_{Abstoß,D}$ = 407,63 keV deutlich kleiner als für Wasserstoff, was die Kernfusion begünstigt.

Ein wichtiger Bestandteil zur theoretischen Erklärung der stattfindenden Kernfusionsreaktion ist das Gesetz zur Erhaltung von Impuls und Energie. Daraus lässt sich herleiten, dass es energetisch günstiger ist, wenn zwei translatorisch sich bewegende Teilchen treffen, als wenn ein bewegtes Teilchen auf ein unbewegliches Ziel trifft.

1. Fall: Ein bewegtes Teilchen (Masse $m_1$, Geschwindigkeit $\mathbf{v}_1$) trifft auf unbewegtes Teilchen:

$$\mathbf{P_1} = m\,\mathbf{v_1} = \mathbf{const.};$$

$$\Sigma\,|\mathbf{P_1}| = m\,|\mathbf{v_1}| = m\,v_1;$$

$$E_{1,kin} = \tfrac{1}{2}\,m_1\,\mathbf{v_1}^2 = const.$$

2. Fall: Zwei gegensätzlich bewegte Teilchen (jeweils Masse $m_2 = m_1$, Geschwindigkeit $v_2 = \pm\,v_1/2$) treffen sich horizontal und elastisch:

$$\mathbf{P_2} = +\,m_2\,\mathbf{v_2} - m_2\,\mathbf{v_2} = 0 = \mathbf{const.};$$

$$\Sigma\,|\mathbf{P_2}| = m\,|\mathbf{v_2}| + m\,|-\mathbf{v_2}| = m\,v_2 + m\,v_2 = 2\,m\,v_2 = 2\,m\,v_1/2 = m\,v_1 = \Sigma\,|\mathbf{P_1}|;$$

$$E_{2,kin} = \tfrac{1}{2} * [m_2\,\mathbf{v_2}^2 + m_2\,\mathbf{v_2}^2] =$$
$$= m_2\,\mathbf{v_2}^2 =$$
$$= m_1\,(\mathbf{v_1}/2)^2 =$$
$$= \tfrac{1}{4}\,m_1\,\mathbf{v_1}^2 =$$
$$= \tfrac{1}{2}\,E_{1,kin}.$$

Obwohl also die Summe der Impulse der aufeinander treffenden Teilchen in beiden Fällen gleich groß ist, wird im zweiten Fall nur die halbe kinetische Energie benötigt wie im ersten Fall. Folglich ist die Variante von mehreren kollidierenden Teilchen, die sich mit hoher Geschwindigkeit entgegenkommen, energetisch ungleich vorteilhafter.

Daher kann eine Kernfusion bereits einsetzen, wenn die im System übertragbare Energie nur die Hälfte der jeweiligen Coulombschen Abstoßung beträgt, also E = $U_{Abstoß}/2$. Für den Fall von Deuterium gilt somit $U_{Abstoß,D}/2$ = 203,815 keV und ist auf jeden Fall geringer als für Wasserstoff.

Darüber hinaus tritt bei der Kernfusion auch ein Tunneleffekt auf, der - wie von Prof. Dr. Lesch beschrieben - auch für den Ablauf der Kernfusion in der Sonne relevant ist. Daher liegt die praktische Initüerungsenergie für eine Kernfusion noch unterhalb des obigen, theoretischen Wertes. Der Tunneleffekt beruht darauf, dass bei einer starken Annäherung zweier Teilchen das Betrags-Quadrat der Wellenfunktion $|\psi|^2$ als Wahrscheinlichkeitsdichte für den Ort des betreffenden Teilchens hinter dem oben erwähnten Coulombwall nicht gleich Null ist, sondern noch einen endlichen Wert besitzt, so dass ein solches Teilchen auch ohne ausreichende translatorische Energie mit einer gewissen, endlichen Wahrscheinlichkeit in den Atomkern hinter dem Coulombwall gelangen kann. Da somit eine endliche Wahrscheinlichkeit für das "Springen" oder "Tunneln" eines positiv geladenen Teilchens, bspw. eines Protons, auch bei verschiedenen Abständen der betreffenden Teilchen besteht, gibt es genau genommen keine absolute Barriere für das Einsetzen der Kernfusion. Vielmehr wird diese umso stärker ablaufen, je näher die beteiligten Teilchen einander aufgrund ihrer translatorischen Energie kommen können.

Kollidieren - bspw. in einem Teilchenbeschleuniger - zwei Protonen miteinander in Form eines zentralen Stosses, wobei jedes Proton eine kinetische Energie von 26 GeV hat, so beträgt deren Gesamtimpuls zwar P = 0, aber die bei der Kollision frei werdende Energie beträgt in etwa 50 GeV. Würden mehrere Teilchen kollidieren, könnte eine noch höhere Energie freigesetzt werden.

Die kinetische Energie eines zweiatomigen Moleküls setzt sich, nach quantentheoretischen Betrachtungen, allgemein aus drei Komponenten zusammen, der Translationsenergie, der Rotationsenergie und der Schwingungsenergie:

$$E_{Molekül} = E_{trans} + E_{rot} + E_{schwing}$$

Dabei reagieren alle drei obigen Energieformen unterschiedlich auf den Einfluss der Temperatur, so dass man optimalerweise einen Temperaturbereich finden sollte, wo der Anteil der Translationsenergie $E_{trans}$ maximal ist und die beiden anderen Energieformen nur einen geringen Anteil an der Gesamtenergie des betrachteten Moleküls bilden. Wie aus den weiter oben angeführten strukturellen Überlegungen hervorgeht, scheint der Wasserstoff im Wirtskristall überwiegend in atomarer Form vorzuliegen. Allerdings sind die Bindungsverhältnisse bis zum heutigen Tage nich ausreichend verstanden, so dass man auch davon ausgehen kann, dass es es insbesondere bei hohen Temperaturen und hohen Aussendrücken zu Rekombination der Wasserstoffatome zu $H_2$ kommen kann. Diese $H_2$-Moleküle würden dann, wieder einen größeren Anteil an Schwingungsenergie und Rotationsenergie innehaben, welche dann der für die Kernfusion notwendigen translatorischen Energie nicht mehr zur Verfügung stünden. Somit ist nicht jedes Temperaturfenster optimal geeignet, um eine Kernfusion zu starten, da bei zu hohen Temperaturen der Anteil von $E_{rot} + E_{schwing}$ überproportional zunimmt, und somit Energie für Rotation und Schwingung verschwendet wird und nicht mehr im gewünschten Ausmaß zur translatorischen Energie beiträgt. Im Temperaturbereich von 1.300 K - 1.500 K ist insbesondere unterhalb von 1.400 K noch nicht das optimale Temperaturfenster erreicht. Bei 1.400 K - 1.500 K ist der optimale Bereich für die Zunahme der translatorischen Energie $E_{trans}$ erreicht, wogegen bei einer Temperatur oberhalb von 1.500 K der größte Anteil der zugeführten Energie wohl in unerwünschte Schwingungs- und Rotationsenergie umgewandelt wird und somit bei einem translatorischen Zusammenstoß verschwendet wird und die Translationsenergie $E_{trans}$ nicht mehr ausreichend ist, um die Kerne zu verschmelzen.

Ein weiterer wichtiger Gesichtspunkt zur Erklärung der stattfindenden Kernfusionsreaktion ist die Geschwindigkeitsverteilung von Gasteilchen nach Maxwell-Boltzmann.

Die Verteilung besagt, dass bei jeder beliebigen, vorgegebenen Temperatur die Geschwindigkeit nicht aller Gasteilchen gleich groß ist. Es gibt stets Teilchen, die langsamer und auch solche, die viel schneller sind als der Hauptanteil der Teilchen/Gasmoleküle. Dabei verschiebt sich sich das Maximum dieser Verteilungskurven bei zunehmender Temperatur in Richtung steigender Geschwindigkeit. So haben bei 1.400 K beispielsweise die meisten Teilchen eine Geschwindigkeit von 3.400 m/s, allerdings gibt es einen kleinen Anteil von etwa $2{,}17 * 10^{-13}$ % der Teilchen, die sogar eine Geschwindigkeit von 20 000 m/s oder mehr haben.

Aus den obigen, theoretischen Überlegungen ergibt sich, dass die Bedingungen von Temperatur und Druck zur Herbeiführung der Kernfusion derart gewählt sein müssen, dass Deuterium von einem geeignetem Metall (bzw. vorherigen Metallhydrid) derart aufgenommen wird, dass dort die translatorische Bewegung des Deuteriums im Gitter ausreichend energetisch ist, um die Kerne so nahe zueinander zu bringen, dass eine Kernfusion initiiert wird.

Kollidieren zwei Teilchen miteinander, so können die dabei entstehenden Impulse bei folgenden Stößen auch auf umgebende Teichen übertragen werden, womit sich deren Impuls und damit die Wahrscheinlichkeit erhöhen kann, dass ein derart "beschleunigtes" Teilchen die coulombsche Potentialbarriere bei einem folgenden Stoß auf ein anderes Teilchen überwinden kann.

So kann es beispielsweise zu einer Verdopplung der Energie kommen, wenn 4 Atome gleicher Masse und Geschwindigkeit miteinander kollidieren.

Wird dabei nun ein Teilchen von höherem Gewicht eingefügt, beispielsweise der im Vergleich zu Deuterium um 8-fach schwerere Sauerstoff, so kann bei einem Stoß mit einem derartig schweren Teilchen das bedeutend leichtere Teilchen, bspw. ein Proton, bei einem elastischen Stoß bspw. eine starke Bescheunigung erfahren und eine hohe Kollisionsenergie von dem Vielfachen seiner ursprünglichen Energie aufnehmen.

Dabei gilt für die resultierende Geschwindigkeit $u_2$ eines Teilchens:

$$u_2 = [m_2\, v_2 + m_1\, (2\, v_1 - v_2)] \,/\, [m_1 + m_2]$$

Wenn zwei Teilchen unterschiedlicher Masse (bspw. $m_1 = 8\, m_2$) für die ursprünglich $v_2 = -\, v_1$ galt, d.h., die Teilchen fliegen mit gleichen Gewschwindigkeiten aufeinander zu, so ist die Geschwindigkeit $u_2$ des leichteren Teilchens nach dem Stoss

$$u_2 = [m_2\, v_2 + 8\, m_2\, (-\, 3\, v_2)] \,/\, [9\, m_2] =$$

$$= v_2/9 - 24/9\, v_2 = -\, 23/9\, v_2 \approx -\, 2{,}5\, v_2.$$

Die kinetische, translatorische Energie $E_{trans}$ beträgt dann:

$$E_{trans} = \tfrac{1}{2}\, m_2 * 6{,}25\, v_2^2,$$

d.h., die Energie des leichteren Teilchens hat sich auf mehr als den sechs-fachen Wert erhöht.

Aufgrund all dieser theoretischen Überlegungen lässt sich vermuten, dass sich aus den erfindungsgemäßen Reaktionsbedingungen etwa folgende Situation ergibt:

Es wurden 206,8 mMol an Deuteriumgas verwendet, was einer Anzahl von $1{,}24 * 10^{23}$ $D_2$-Molekülen entspricht. Entsprechend der oben erwähnten maxwellschen Geschwindigkeitsverteilung hätten damit näherungsweise 270 000 000 Deuteriumatome eine Geschwindigkeit von 20 000 m/s oder mehr, was einer kinetischen Energie von etwa 8,35 eV pro Teilchen entspräche. Daraus könnte man folgern, dass wenigstens 6.100 Stöße vorliegen müssten, um die Coulombbarriere einmal zu überwinden, wobei diese Barriere aufgrund des Tunneleffektes ja gar nicht erreicht werden muß.

Werden aber in dasselbe System z.B. Sauerstoffatome gleicher Geschwindigkeit hinzugefügt, so können Deuteriumatome aufgrund von elastischen Stößen mit Sauerstoffatomen ihre translatorische Energie deutlich erhöhen und damit bei Stößen mit anderen Deuterumatomen diesen deutlich näher kommen, wodurch sich die Wahrscheinlichkeit, dass diese unter der Coulombbarriere hindurchtunneln können, deutlich erhöht. Man könnte auch sagen, dass sich in obigem Beispiel die Anzahl der notwendigen "schnellen" Deuteriumatome reduziert, beispielsweise um einen Faktor von ca. 500 auf nur mehr 500 000.

Aufgrund dieser Überlegungen müssten somit etwa $10^5$ Neutronen pro Zeiteinheit registriert werden, was bei der erfindungsgemäßen Methode gezeigt werden konnte.

Einen weiteren positiven Einfluss auf das Stattfinden der Kernfusionsreaktion nimmt natürlich auch der Oberflächenaufbau des verwendeten Trägermaterials ein. Es ist von Vorteil, wenn die verwendeten Trägermetalle in Form von dünnen Platten, Drähten, Spänen oder vorzugsweise in Form von (gepressten) Pulvern Anwendung finden. Durch eine möglichst große Außenoberfläche, wird die Adsorptionsrate des $D_2$ an die Oberfläche des Ausgangskörpers maximiert. Da erfindungsgemäß das anfänglich verwendete Titanhydrid im Reaktor einer vakuum-thermischen Entgasung unterzogen wird, sollte es zu Beginn des Prozesses zumindest teilweise wieder als metallisches Titan vorliegen. Allerdings scheint das zuvor anwesende Titanhydrid einen positiven Einfluss auf die Gittereigenschaften des nun mit Deuterium zu beladenen Titans zu haben, indem das Deuterium leichter und mit höherer Geschwindigkeit hineindiffundieren kann. Die optimalen Gitterbedingungen im Zusammenspiel mit einer möglichst großen äußeren Oberfläche (Pulver gepresst), sowie den optimiert gewählten Prozessbedingungen, insbesondere das Zsammenspiel von Druck, und Temperaturführung scheinen nun die Deuterium-Atome auf den (aufgeweiteten) Zwischengitterplätzen, die wohl auch ausreichenden Platz für translatorische Bewegungen bieten, derart zu beschleunigen, dass translatorische Stöße mit ausreichend hoher Energie vorliegen eine Kerfusionsreaktion zu initiieren.

Ein weiterer, vorteilhafter Anwendungszweig der kalten Kernfusion könnte wie bereits weiter oben erwähnt sein, dass die erhöhte Strahlung, insbesondere die frei werdende Neutronen- und/oder Gammastrahlung, zur Transmutation genutzt wird. Dabei ist insbesondere die nukleare Transmutation zur Umwandlung radioaktiver Isotope in andere (nicht radioaktive) Isotope wünschenswert. Beispielsweise könnte somit radioaktiver Abfall (Uran-Isotope oder ähnliche), wie er beispielsweise als Abfall bei Kernkraftwerken anfällt, effektiv entsorgt werden oder zumindest in minder gefährlichen Abfall umgewandelt werden. Zur Verwendung der Vorrichtung zur Umwandlung von radioaktivem Abfall kann entweder eine besondere kalottenförmige Reaktorbauweise zum Einsatz kommen, die gegebenenfalls mehrschalig ist. Im Inneren des kalottenförmigen Reaktors kann das Arbeitsmuster 3 installiert sein, welches Strahlung freisetzen soll und radiaktiven Abfall beispielsweise in flüssiger Form in der Außenschale bestrahlt und diesen in weniger bedenklichen Abfall umwandelt.

Als weitere Variante wäre denkbar, dass der Arbeitskörper 3 nach dem erstmaligem Entgasen bei beispielsweise 1073 K auf Raumtemperatur abgekühlt wird, danach der Anlage zunächst entnommen wird um den Körper alsdann in eine Lösung mit radiaktiven Abfällen einzutauchen und ihn mit der Lösung vollzusaugen. Danach soll der Arbeitskörper getrocknet werden um im nächsten Schritt erneut in die erfindungsmäßige Anlage eingebaut zu werden. Mit dem quasi radioaktiv beladenen Arbeitsmuster soll dann nach vorher beschriebener Methode die Kernfusion gestartet werden. Somit werden die radioaktiven Verbindungen direkt am Arbeitsmuster 3 durch die dort entstehende Bestrahlung unschädlich gemacht. [Tsvetkov S. A.: "Possibility of using of cold fusion for the transmutation of nuclear waste products." Condensed matter nuclear science proceeding of the 10th international conference on cold fusion by Editors P.L. Hagelstein and S. R. Chubb, World Scientific, 2006, pp. 487-492].

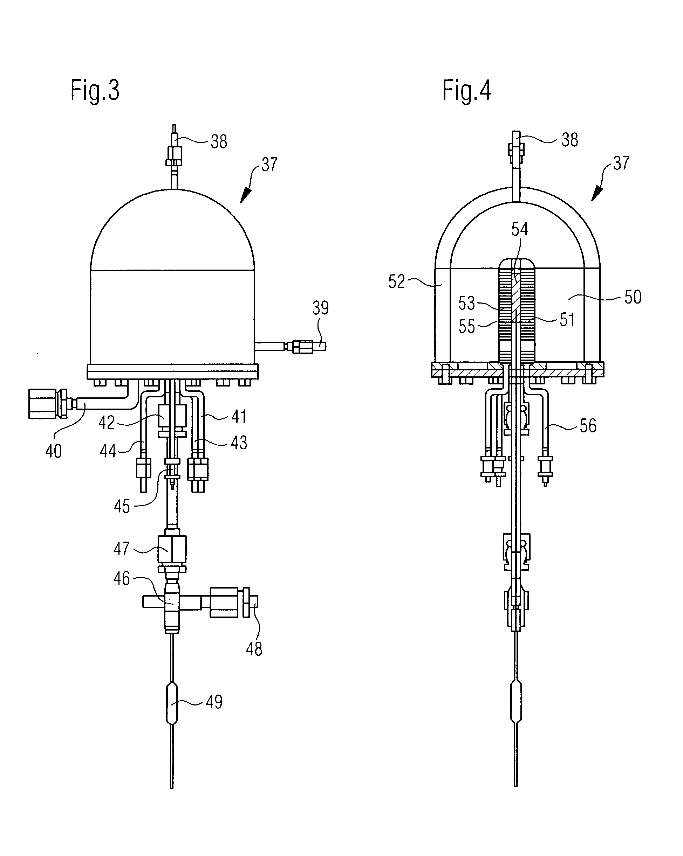

Die Figuren 2 und 3 zeigen dazu einen besonderen, kalottenförmig ausgebildeten Reaktor 37 als Dampfgenerator. Diese besondere Reaktorkonstruktion ist insbesondere dann geeignet, wenn die bei der Kernfusion entstehende Strahlung zur Aufheizung bzw. zum Verdampfen von Wasser herangezogen werden soll, wobei der Wasserdampf zur Erzeugung von Strom Verwendung finden soll.

Der Dampfgenerator 37 umfasst einen Rohrstutzen 38 zum Austritt des entstehenden Wasserdampfes. Ein anderer Rohrstutzen 39 dient zum Evakuieren einer Kammer 52, die das System thermisch isolieren soll. Ein Anschluß 40 bildet eine Zuleitung zum Einlassen von Wasser in den Kessel 50.

Desweiteren gibt es Kabelverschraubungen 41 und 43 für den Heizer 53. Das Arbeitsmuster 54 befindet sich auf dem Thermoelement 49. Die Kabelverschraubung 42 schließt das Arbeitsmuster hermetisch ab.

Durch Rohrstutzen 44 kann Inertgas eingelassen werden oder Vakumm gezogen werden. Auf derartigem Weg kann die Wärmeleitfahigkeit des Zwischenraums mit einem thermoelektrischen Konvektor 55 variiert werden. Der Konvektor 55 ist mit den Kabelverschraubungen 45 und 56 elektrisch an eine Thermobatterie verbunden.

Der gasdicht abschließende Verbinder 47 dient zum Einsetzen des Arbeitsmusters 54. Über den Rohrstutzen 48 wird das Arbeitsgas (eine Mischung aus $D_2$ mit Luft oder einem gleichwertigen Gas, wie eingangs beschrieben) ein- und abgelassen, wobei ein Thermoelement 49 mit Kabelverschraubung 46 die Temperaturkontrolle bewerkstelligt. Der Erhitzer 51 trennt den Kessel 50 vom wärmeerzeugenden Arbeitsmuster 54.

Die Fig. 4 zeigt einen ebenfalls kalottenförmig ausgebildeten Reaktor 57. Dieser und insbesondere dessen Anschlüsse sind im Wesentlichen baugleich zu dem Dampferzeuger 37. Jedoch dient der Reaktor 57 nicht oder jedenfalls nicht ausschließlich als Dampferzeuger.

Vielmehr gibt es eine das Arbeitsmuster 54 seitlich und vorzugsweise auch oben umgebenden, beispielsweise durch ein haubenförmiges Gebilde 58 innerhalb der Kammer 52 abgeschlossenen Hohlraum 59, zur Aufnahme von radiaktivem Material, welches beispielsweise als Abfallprodukt in Atomkraftwerken anfällt. Der Raktor 57 bezweckt, solche radioaktiven Materialen durch Transmutation in andere, weniger Radioaktive Substanzen umzuwandeln.

Dazu wird vor Aktivieren des Reaktors 57 der Hohlraum 59 mit den umzuwandelnden, radioaktiven Abfallprodukten befüllt. Anschließend wird die Kammer 50 verschlossen, beispielsweise durch Aufsetzen des Außenmantels 60 auf eine Basisplatte 61 der Vorrichtung.

Als nächstes wird der Reaktor 57 in Betrieb genommen, genauso wie weiter oben zu dem Dampferzeuger 37 ausgeführt. Bei der dabei eingeleiteten Kernfusion wird energiereiche Strahlung freigesetzt, beispielsweise Neutronen- und/oder Gammastrahlung, und diese bewirkt eine Umwandlung der radioaktiven Atomkerne in dem Hohlraum 59 in ungefährlichere, weniger radioaktive Substanzen bzw. Substanzen mit einer niedrigeren Halbwertszeit.

Nach einem oder mehreren Kernfusionszyklen, welche durch Abzug und Einleiten von Deuterium gekennzeichnet sind, wird der Hohlraum 59 entleert und sodann wieder neu mit radioaktivem Material befüllt.

Bezugszeichenliste

| | | | |
|---|---|---|---|
| 1 | Reaktor | 26 | Düsenanschluss |
| 2 | Innenraum | 27 | Ventil |
| 3 | Arbeitsmuster | 28 | Innenraum |
| 4 | Thermoelement | 29 | Drucksensor |

(fortgesetzt)

| | | | |
|---|---|---|---|
| 5 | Zugang | 30 | Eingang |
| 6 | Temperaturmessgerät | 31 | Druckmessgerät |
| 7 | Wärmetauscher | 32 | Düse |
| 8 | Heizeinrichtung | 33 | Drucksensor |
| 9 | Szintillationsdetektor | 34 | Eingang |
| 10 | Bleimonitor | 35 | Ventil |
| 11 | Öffnung | 36 | Ventil |
| 12 | Zähler | 37 | Reaktor |
| 13 | Neutronenverlangsamer | 38 | Rohrstutzen |
| 14 | erster Düsenanschluss | 39 | Rohrstutzen |
| 15 | Ventil | 40 | Anschluß |
| 16 | Anschluss | 41 | Kabelverschraubung |
| 17 | Mischballon | 42 | Kabelverschraubung |
| 18 | zweiter Düesenanschluss | 43 | Kabelverschraubung |
| 19 | Ventil | 44 | Rohrstutzen |
| 20 | Anschluss | 45 | Kabelverschraubung |
| 21 | Pumpe | 46 | Kabelverschraubung |
| 22 | dritter Düesenanschluss | 47 | Verbinder |
| 23 | Ventil | 48 | Rohrstutzen |
| 24 | Anschluss | 49 | Thermoelement |
| 25 | Ballon | 50 | Kessel |
| 51 | Erhitzer | | |
| 52 | Kammer | | |
| 53 | Heizer | | |
| 54 | Arbeitsmuster | | |
| 55 | Konvektor | | |
| 56 | Kabelverschraubung | | |
| 57 | Reaktor | | |
| 58 | Haube | | |
| 59 | Hohlraum | | |
| 60 | Außenmantel | | |
| 61 | Basisplatte | | |

**Patentansprüche**

1. Verfahren zur Durchführung einer Kernfusion unter Verwendung von Deuterium, absorbiert durch ein Gitter eines Ausgangskörpers (3;54) mit der Eigenschaft der Wasserstoffaufnahme, unter vakuum-thermischer Entgasung des in einem Reaktor (1 ;37;57) angebrachten Ausgangskörpers (3;54) zwecks des Erreichens eines balancierten Drucks des verbleibenden Gases in dem Reaktor (1;37;57) von nicht mehr als 1 Pa, ggf. nach Verringerung der Temperatur des Ausgangskörpers (3;54) unter Einlass des obenerwähnten, gasförmigen Deuteriums in den Reaktor (1;37;57) sowie Initiieren der Kernfusion, **dadurch gekennzeichnet, dass**

a) die vakuum-thermische Entgasung des in dem Reaktor (1;37;57) angebrachten Ausgangskörpers (3;54) bei einer Temperatur geschieht, welche 90 % der Schmelztemperatur des Ausgangskörpers (3;54) nicht übersteigt,
b) dass anschließend die Temperatur des Ausgangskörpers (3;54) verringert wird bis zu einem Wert, der in einem Bereich von 42 bis 45 % der Schmelztemperatur liegt;
c) vor der Sättigung des Ausgangskörpers (3;54) mit dem gasförmigen Deuterium erfolgt eine Mischung des

15

gasförmigen Deuteriums einerseits mit Atmosphärenluft und/oder mit einem Gas aus einer oder mehreren gasförmigen Komponenten, welche Bestandteile der Atmosphärenluft sind, andererseits zu einer gasförmigen Arbeitsmasse, derart, dass die Menge des Deuteriums einem Verhältnis von 95,91 bis 99,99 Vol.-% vom Gesamtvolumen der Arbeitsmasse entspricht;

d) diese Gasmischung wird in den Reaktor (1;37;57) mit einer Geschwindigkeit eingelassen, welche die Erwärmung des Ausgangskörpers (3;54) um 50 bis 200 Grad pro Sekunde sicherstellt, bis zum Zeitpunkt des Erreichens einer Zusammensetzung des Ausgangskörpers (3;54), wobei im Ausgangskörper (3;54) auch Körner mit einer Gamma-Kristallstruktur vorliegen.

2.  Verfahren nach Anspruch 1, **dadurch gekennzeichnet, dass** der Anteil der Atmosphärenluft in der Gasmischung von gasförmigem Deuterium und Atmosphärenluft 0,1 bis 4,09 Vol.-% des Volumenwertes der Gasmischung beträgt.

3.  Verfahren nach Anspruch 1 oder 2, **dadurch gekennzeichnet, dass** der Anteil der Atmosphärenluft in der Gasmischung von gasförmigem Deuterium und Atmosphärenluft bei einer Grenze von 1 bis 4 Vol.-% vom Gesamtvolumen der Gasmischung liegt, und der Einlass der genannten Mischung in den Reaktor (1;37;57) mit einer Geschwindigkeit verläuft, welche die Erwärmung des Ausgangskörpers (3) um 90 bis 180 Grad pro Sekunde sicherstellt.

4.  Verfahren nach einem der vorhergehenden Ansprüche, **dadurch gekennzeichnet, dass** das mit Deuterium zu vermischende Gas aus einer oder mehreren gasförmigen Komponenten, welche Bestandteile der Atmosphärenluft sind, wenigstens eine Komponente oder nur solche Komponenten aufweist, deren Atome oder Moleküle schwerer sind als Deuterium, .vorzugsweise schwerer als Deuterium-Moleküle, insbesondere wenigstens einen Bestandteil, ausgewählt aus der Gruppe umfassend Sauerstoff, Stickstoff und Kohlendioxid.

5.  Verfahren nach einem der vorhergehenden Ansprüche, **dadurch gekennzeichnet, dass** die bei der als Folge der Kernfusion auftretenden Erwärmung des Ausgangskörpers (3;54) frei werdende Energie abgeführt und genutzt wird, beispielsweise zur Erzeugung von Dampf zwecks Antrieb einer mit einem Elektrogenerator gekoppelten Turbine.

6.  Verfahren nach einem der vorhergehenden Ansprüche, **dadurch gekennzeichnet, dass** die als Folge der Kernfusion auftretende Strahlung, insbesondere Neutronen- und/oder Gammastrahlung, zur Transmutation von Atomen, Molekülen oder sonstigen Teilchen genutzt wird, vorzugsweise zur nuklearen Transmutation, bevorzugt zur Umwandlung eventuell radioaktiver Isotope in andere Isotope, insbesondere verschiedener Uran-Isotope.

7.  Vorrichtung zur Durchführung der Kernfusion unter Verwendung gasförmigen Deuteriums, absorbiert durch ein Kristallgitter mit der Eigenschaft der Wasserstoffaufnahme; bestehend aus

- einem Reaktor (1;37;57) mit einem in dessen Innenraum (2;50) angebrachten Ausgangskörper (3;54),
- einer Einrichtung (21) zur Evakuierung des Innenraums (2;50) des Reaktors (1;37;57), deren Eingangsdüse (von der Anlage) mit dem Innenraum (2;50) des Reaktors (1;37;57) über mindestens ein (erstes) Ventil (19) kommuniziert;
- einer Einrichtung (8) zur Erwärmung und zur Kühlung des Ausgangskörpers (3;54) in dem Reaktor (1;37;57),
- einer Einrichtung (4,6;49) zur Messung der Temperatur des Ausgangskörpers (3;54),
- wenigstens einem Drucksensor (29,33),
- einer Quelle der Arbeitsmasse, die wenigstens das gasförmige Deuterium beinhaltet und deren Ausgangsdüse (von der Quelle) mit dem Innenraum (2;50) des Reaktors (1;37;57) über ein zweites Ventil kommuniziert, und
- einer Einrichtung zum Einlass der Arbeitsmasse in den Reaktor (1;37;57),
**gekennzeichnet durch**
- eine Einrichtung, um aus Deuterium einerseits und aus Atmosphärenluft und/oder aus einem Gas aus einer oder mehreren gasförmigen Komponenten, welche Bestandteile der Atmosphärenluft sind, andererseits die gasförmige Arbeitsmasse zu mischen, derart, dass die Menge des Deuteriums einem Verhältnis von 95,91 bis 99,99 Vol.-% vom Gesamtvolumen der Arbeitsmasse entspricht.

8.  Vorrichtung nach Anspruch 7, **dadurch gekennzeichnet, dass** der Anteil der Atmosphärenluft einem Verhältnis von 0,1 bis 4,09 Vol.-% vom Gesamtvolumen der Arbeitsmasse entspricht.

9.  Verfahren nach einem der Ansprüche 7 oder 8, **dadurch gekennzeichnet, dass** das mit Deuterium zu vermischende Gas aus einer oder mehreren gasförmigen Komponenten, welche Bestandteile der Atmosphärenluft sind, wenigstens eine Komponente oder nur solche Komponenten aufweist, deren Atome oder Moleküle schwerer sind als Deuterium,

vorzugsweise schwerer als Deuterium-Moleküle, insbesondere wenigstens einen Bestandteil, ausgewählt aus der Gruppe umfassend Sauerstoff, Stickstoff und Kohlendioxid.

10. Vorrichtung nach einem der Ansprüche 7 bis 9, **dadurch gekennzeichnet, dass** die Quelle der Arbeitsmasse und die Einrichtung zum Einlass der Arbeitsmasse in den Reaktor (1;37;57) die Form eines Mischballons (17) aufweist, mit drei Düsen und/oder Schläuchen, zwei zusätzlichen Ventilen und einem Drucksensor (29) in diesem Mischballon (17), wobei die erste Düse (18) des Mischballons (17) als Ausgangsdüse zum Ausgang der Quelle der Arbeitsmasse dient, wobei die zweite Düse (26) des genannten Mischballons (17) und das erste zusätzliche Ventil (27) als Eingang zum Einlass der Atmosphärenluft dienen, wobei die dritte Düse (22) des Mischballons (17) als Eingang zum Einlass des gasförmigen Deuteriums dient, und wobei der Drucksensor (29) im Mischballon (17) mit dem Druckmessgerät (31) verbunden ist.

11. Vorrichtung nach Anspruch 10, **dadurch gekennzeichnet, dass** der Mischballon (17) eine vierte Düse aufweist, die durch das erste Ventil mit der Eingangsdüse der Einrichtung zur Evakuierung des Innenraums (2;50) des Reaktors (1 ;37;57) verbunden ist.

12. Vorrichtung nach Anspruch 10 oder 11, **gekennzeichnet durch** einen zusätzlichen Ballon, welcher Atmosphärenluft in einer Standardzusammensetzung enthält, der über ein zweites, zusätzliches Ventil mit der zweiten Düse (26) des Mischballons (17) kommuniziert.

13. Vorrichtung nach einem der Ansprüche 7 bis 12, **gekennzeichnet durch** einen mit dem Reaktor (1 ;37;57) verbundenen Drucksensor (33).

14. Vorrichtung nach einem der Ansprüche 7 bis 13, **dadurch gekennzeichnet, dass** der Reaktor (1;37;57) mit wenigstens einem Kühlsystem gekoppelt ist, welches die bei der infolge der Kernfusion auftretenden Erwärmung des Ausgangskörpers (3;54) frei werdende Energie abführt und einer weiteren Nutzung zuführt, beispielsweise zur Dampferzeugung und schließlich zur Stromerzeugung mittels einer mit einem Stromgenerator gekoppelten Dampfturbine, wobei vorzugsweise an oder in dem Reaktor (1;37;57) ein oder mehrere Kühlsysteme vorgesehen sind, bevorzugt den Ausgangskörper (3;54) zumindest bereichsweise umgebend, insbesondere in Form von Kühlschlangen und/oder Wärmetauscher (7).

15. Vorrichtung nach einem der Ansprüche 7 bis 14, **dadurch gekennzeichnet, dass** der Reaktor (1;37;57) mit einer Transmutationseinrichtung gekoppelt ist, worin die infolge der Kernfusion auftretende Strahlung, insbesondere Neutronen- und/oder Gammastrahlung, zur Umwandlung von Atomkernen führt, wobei vorzugsweise an oder in dem Reaktor (1 ;37;57) ein oder mehrere Kammern (59) zur Aufnahme von umzuwandelnden Atomkernen vorgesehen sind, bevorzugt den Ausgangskörper (3;54) zumindest bereichsweise umgebend, insbesondere in Form von hauben- oder kalottenförmigen Schalen (58) oder Doppelschalen.

## Fig.1  1.Phasendiagramm Ti-H

Fig.2

Fig.3

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 03160395 A
- JP 03160396 A
- EP 0394204 B1
- RU 2056656 C1

**In der Beschreibung aufgeführte Nicht-Patentliteratur**

- **H. L. FOX.** Die kalte Problematik, der Einfluss auf die Welt, aus Sicht der USA. *SVITEK,* 1993, 173
- **I.L.BELTUKOV et al.** *Physik der Metalle und Metallkunde,* 138-143
- **H. L. FOX.** Die kalte Kernfusion: Das Wesen, die Problematik, der Einfluss auf die Welt aus Sicht der USA. *SVITEK,* 1993, 169-170
- **A. D. MCQUILLAN.** An Experimental and Thermodynamic Investigation oft he Hydrogen-Titanium-System. *Proc. Roy. Soc. (Lond.), Ser. A,* 1950, vol. 204, 309
- **R. L. BECK.** Research and Development of metal Hydrides, Summary Report. *USAEC Report LAR-10,* 01. Oktober 1958, 60-6577-80
- **R. M. HAGG ; F. J. SHIPKO.** The Titanium-Hydrogen System. *J. Amer. Chem. Soc.,* 1956, vol. 78, 5155
- **R. ALSFASSER ; C. JANIAK ; T.M. KLAPÖTKE ; H.J. MEYER.** Moderne Anorganische Chemie. 2007
- **RALF ALSFASSER ; C. JANIAK ; T. M. KLAPÖTKE ; H. J. MEYER.** Moderne Anorganische Chemie. 2007
- Possibility of using of cold fusion for the transmutation of nuclear waste products. **TSVETKOV S. A.** 10th international conference on cold fusion. 2006, 487-492